(19) Europäisches Patentamt
European Patent Office
Office européen des brevets

(11) **EP 2 028 619 A1**

(12) **EUROPEAN PATENT APPLICATION**
published in accordance with Art. 153(4) EPC

(43) Date of publication:
**25.02.2009 Bulletin 2009/09**

(51) Int Cl.:
***G06T 7/20*** (2006.01)

(21) Application number: **07743470.2**

(22) Date of filing: **16.05.2007**

(86) International application number:
**PCT/JP2007/060035**

(87) International publication number:
**WO 2007/138858 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.05.2006 JP 2006145694**

(71) Applicant: **NEC Corporation**
**Minato-ku**
**Tokyo 108-8001 (JP)**

(72) Inventor: **IWAMOTO, Kota**
**Tokyo 108-8001 (JP)**

(74) Representative: **Vossius & Partner**
**Siebertstrasse 4**
**81675 München (DE)**

(54) **VIDEO IMAGE SPECIAL EFFECT DETECTING DEVICE, SPECIAL EFFECT DETECTING METHOD, SPECIAL EFFECT DETECTING PROGRAM AND VIDEO IMAGE REPRODUCING DEVICE**

(57)     An image boundary line candidate pixel detection section detects image boundary line candidate pixels as candidates for pixels specifying an image boundary line from each frame of video and outputs, for each frame, image boundary line candidate pixel information as information indentifying the image boundary line candidate pixels. A line extraction section extracts for each frame as the image boundary line a line specified by the image boundary line candidate pixels indicated by the image boundary line candidate pixel information and output image boundary line description information as information describing the image boundary line for each frame. An image boundary line having frame-set period detection section judges whether or not a frame has the image boundary line for each frame by using the image boundary line description information of respective frames and detects a frame-set period including successive frames having the image boundary line as a frame-set period including special effect.

**Fig. 3**

INPUT VIDEO (FRAME SERIES)

IMAGE BOUNDARY LINE EXTRACTION SECTION — 11

IMAGE BOUNDARY LINE CANDIDATE PIXEL DETECTION SECTION — 111

LINE EXTRACTION SECTION — 112

SPECIAL EFFECT DETECTION SECTION — 21

IMAGE BOUNDARY LINE HAVING FRAME-SET PERIOD DETECTION SECTION — 211

SPECIAL EFFECT FRAME-SET PERIOD INFORMATION

**Description**

**Technical Field**

The present invention relates to a video special effect detection device, a video special effect detection method and a video special effect detection program for detecting special effect in video, and in particular, relates to a video special effect detection device, a video special effect detection method, and a video special effect detection program for detecting video transition by using gradual spatial change of video. The video transition by using gradual spatial change of video is exemplified by wipe or DVE (Digital Video Effect).

**Background Art**

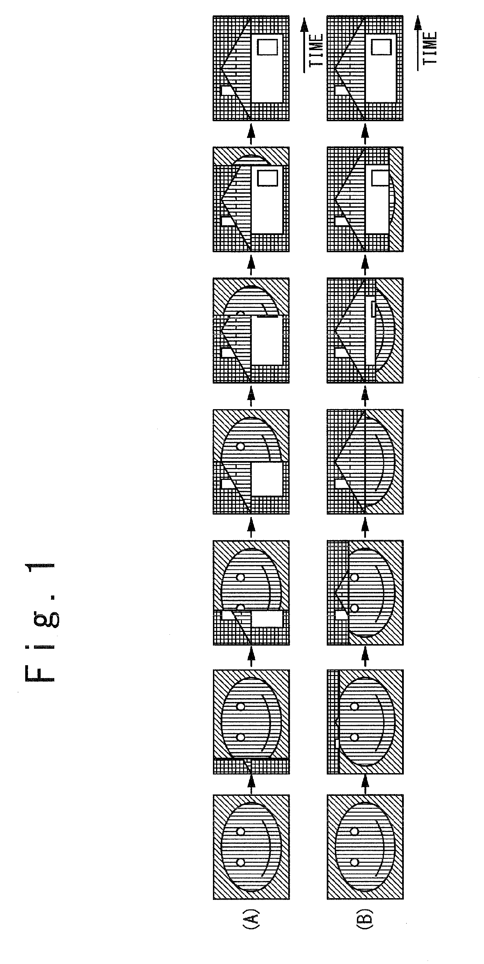

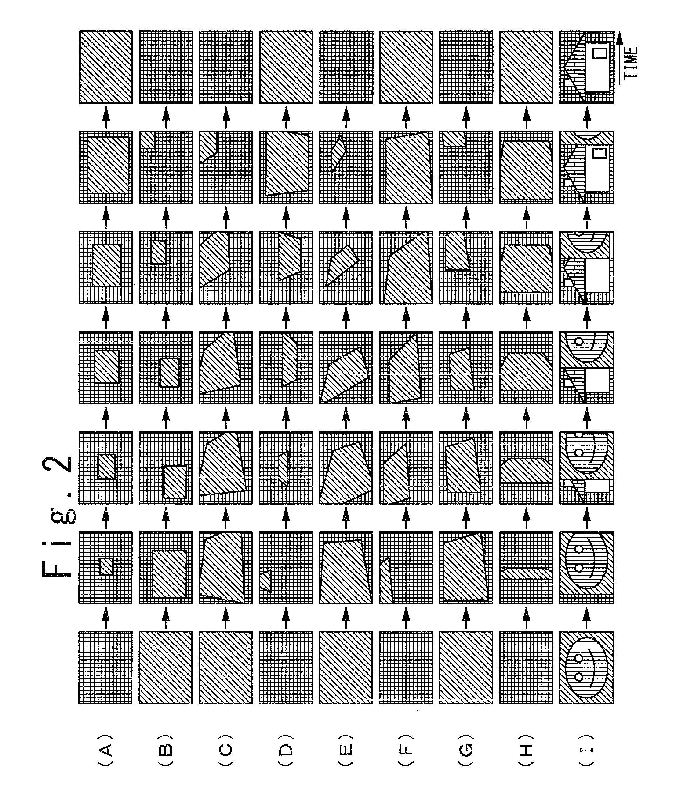

A video special effect is a kind of video transition. In the video special effect, gradual change is performed in which transition is performed from a video before transition to a video after transition such that spatial occupancies of the videos change gradually. The video special effect includes wipe and DVE (Digital Video Effect). Fig. 1 is an explanatory drawing showing examples (A) and (B) of wipe. Fig. 2 is an explanatory drawing showing examples (A) to (I) of DVE.
As exemplified in Fig. 1, in the wipe, positions of videos before and after transition are fixed and regions for respectively displaying the videos are gradually changed to perform the transition on a video screen. As exemplified in Fig. 2, in the DVE, a position of one of videos is fixed and the other video appears or disappears to be superimposed thereon with image transformation such as translating, scaling, rotating and twisting to perform a transition on a video screen. Both cases are characterized in that the transition is performed on the video screen with the videos before and after transition spatially coexists. Additionally, both cases have a large number of patterns of transition.
The video special effect is a video transition which is intentionally inserted by an editor of video, and is different from a cut as an instantaneous video transition frequently used in general. The video special effect is used for an important point of video in terms of meaning and a point which is especially wanted to be emphasized by the editor. For example, the video special effect is used for starting points of new section and topic, a transition point of scene, and so forth. Therefore, it is possible to obtain important information for understanding content and structure of video, by detecting a video special effect.
Methods of detecting special effects such as wipe and DVE are disclosed in documents.
Japanese Laid Open Patent Application JP-A-Heisei 8-237549 (paragraphs 0011 - 0016) and Japanese Laid Open Patent Application JP-P2005-237002A (paragraphs 0031 - 0035) disclose methods of detecting video transition due to gradual change including wipe by using a difference value (inter-frame difference value) of feature amounts of frames adjacent to each other. In the methods disclosed therein, a period is detected in which a feature amount of frame slowly changes. In the method disclosed in Japanese Laid Open Patent Application JP-A-Heisei 8-237549, video transition due to gradual change is detected when there are successive frames in which inter-frame difference value is equal to or more than a threshold for detecting a gradual change and accumulated value of the inter-frame difference value is equal to or more than another larger threshold. A difference in luminance between pixels is used as the inter-frame difference value. In the method disclosed in Japanese Laid Open Patent Application JP-P2005-237002, a wipe is detected when there are successive in which inter-frame difference value is equal to or more than a threshold for detecting a gradual change and there are successive frames, in which inter-frame difference values are equal to or less than a threshold in periods therebefore and thereafter.
Japanese Laid Open Patent Application JP-A-Heisei 7-288840 (paragraph 0011) and Japanese Laid Open Patent Application JP-A-Heisei 11-252501 (paragraphs 0012 - 0020) disclose methods of detecting a wipe. The wipe has a property that a region of a video before transition is gradually replaced by a video after transition and the whole region of the video before transition is replaced by the video after transition at last. In the methods disclosed therein, a uniform-change wipe is detected by using the property of the wipe. Based on a difference value between pixels of adjacent frames and so forth, an image changing region is obtained in each frame. A total image changing region which is obtained by a logical summation of image changing regions of successive frames is evaluated to detect a wipe. Japanese Laid Open Patent Application JP-A-Heisei 11-252509 (paragraphs 0053 - 0057) also discloses a method of detecting a wipe. In the method disclosed in Japanese Laid Open Patent Application JP-A-Heisei 11-252509, it is judged that the possibility of wipe is high when a frame average of prediction errors is large.
Yoshihiko KAWAI, Noboru BABAGUCHI, and Tadahiro KITAHASHI disclose a method of detecting a DVE in "Detection of Replay Scenes in Broadcasted Sports Video by Focusing on Digital Video Effects" (The transactions of Institute of Electronics, Information and Communication Engineers. D-2, Vol. J84-D-2, No. 2, pp. 432-435, February 2001). In the method disclosed in "Detection of Replay Scenes in Broadcasted Sports Video by Focusing on Digital Video Effects", DVE patterns are registered in advance and video is compared with the DVE patterns registered in advance to detect a similar pattern as a DVE.
However, in the conventional methods disclosed in the above documents, video special effects can not be detected with high precision, generally without depending on patterns, and without detecting video change other than the special effects by mistake. The video change other than the special effects is exemplified by a camera motion like pan and zoom, or a gradual change of the movement of an object or the like in video. Although the methods disclosed in Japanese Laid Open Patent Application JP-A-Heisei 8-237549 and Japanese Laid Open Patent Application JP-A-Heisei 11-252501 can be applied generally without depending on patterns of special effects, video change as special effect and video change other than special effect cannot be distinguished because of the use of simple comparison of feature amounts of frames. This is because a feature amount of a frame gradually changes in video change other than special effect as in the case of special effect. Since video change as special effect and video change other than special effect cannot be distinguished, there is a problem of frequent occurrence of detection by mistake of video change other than special effect.

In the methods disclosed in Japanese Laid Open Patent Application JP-A-Heisei 7-288840 and Japanese Laid Open Patent Application JP-A-Heisei 11-252501 (paragraphs 0012 - 0020), a wipe can be detected with being distinguished from video change other than special effect since the wipe is detected by using the uniform-change property of wipe. However, it is extremely difficult to detect a DVE by using the above-mentioned property of wipe since video transition is performed with a complicated image transformation in the case of DVE. For this reason, every pattern of wipes and DVEs cannot be generally detected. In the method disclosed in Japanese Laid Open Patent Application JP-A-Heisei 11-252509, it is judged that the possibility of wipe is high when a frame average of prediction errors is large. Because a large frame average of prediction errors is not limited to the case of wipe, a special effect such as wipe can not be detected with high precision by the method disclosed in Japanese Laid Open Patent Application JP-A-Heisei 11-252509.

In the method disclosed in "Detection of Replay Scenes in Broadcasted Sports Video by Focusing on Digital Video Effects", registration is required for each pattern of special effects. Patterns of special effects are countless and it is impossible to register in advance every pattern of special effects. In the method disclosed in "Detection of Replay Scenes in Broadcasted Sports Video by Focusing on Digital Video Effects", a limited number of special effects of which patterns have been registered can be detected but special effects of which patterns have not been registered can not be detected.

Japanese Laid Open Patent Application JP-A-Heisei 6-259561 discloses a calculation device for calculating moving speed and moving direction of a target in dynamic image with high precision at high speed.

Japanese Laid Open Patent Application JP-A-Heisei 9-245167 discloses an image matching method for rapidly performing matching of complicated images.

Japanese Patent No.3585977 discloses a movement region detection device which can accurately obtain a position of a moving body by using image processing even when there is a shadow of the moving body on a floor.

"Handbook of Image Analysis, New Edition" (University of Tokyo Press, September 2004) under the supervision of Mikio TAKAGI and Haruhisa SHIMODA, discloses related art to the present invention.

John Canny discloses related art to the present invention in "A Computational Approach to Edge "Detection" (IEEE Transactions on Pattern Analysis and Machine Intelligence, Vol. 8, No. 6, pp. 679-698, November 1986).

H. J. Zhang, A. Kankanhalli, and S. W. Smoliar disclose related art to the present invention in "Automatic Partitioning of Full-Motion Video" (Multimedia Systems 1, pp. 10-28, 1993).

**Disclosure of Invention**

An object of the present invention is to provide a video special effect detection device, a video special effect detection method, and a video special effect detection program which can detect special effect included in video without depending on pattern of the special effect, generally, without detecting video change other than special effect by mistake, and at high precision.

As one of features of the present invention, it is noted that a frame in a special effect generally has a boundary line (referred to as an image boundary line) between two images in the frame without depending on patterns.

A video special effect detection device according to the present invention extracts from a frame of video an image boundary line as a boundary line between two images in the frame and detects a special effect in the video. The video special effect detection device preferably includes: an image boundary line extraction section which extracts from each frame of the video an image boundary line as a boundary line between two images in the each frame and outputs image boundary line description information as information describing the image boundary line; and a special effect detection section which detects a frame-set period including the special effect by using the image boundary line description information of respective frames and outputs special effect frame-set period information as information identifying the frame-set period. The special effect is typically a video transition using a wipe or a digital video effect. The image boundary line may include a line in the frame, which moves in conjunction with the boundary line between the two images in the frame.

In the video special effect detection device according to the present invention, the image boundary line extraction section preferably includes: an image boundary line candidate pixel detection section configured to detect image boundary line candidate pixels as candidates for pixels specifying the image boundary line from each frame of the video and output for each frame image boundary line candidate pixel information as information indentifying the image boundary line candidate pixels; and a line extraction section configured to extract for each frame as the image boundary line a line specified by the image boundary line candidate pixels indicated by the image boundary line candidate pixel information and output image boundary line description information as information describing the image boundary line for each frame.

The image boundary line candidate pixel detection section may detect, as the image boundary line candidate pixels, pixels which satisfy any one or a combination of a plurality of conditions : pixels in edge; pixels having large inter-frame pixel difference values; and pixels belonging to a region in which motion vectors are varied.

The line extraction section may extract the line specified by the image boundary line candidate pixels as the image boundary line by using Hough transform.

In the video special effect detection device according to the present invention, the special effect detection section preferably includes an image boundary line having frame-set period detection section configured to judge whether or not a frame has the image boundary line for the each frame by using the image boundary line description information of respective frames, detect a frame-set period including successive frames having the image boundary line as the frame-set period including the special effect, and output special effect frame-set period information as information identifying the frame-set period.

By employing such configuration, the video special effect detection device according to the present invention extracts an image boundary line as a boundary line between two images in a frame and detects a frame-set period including special effect based on the extracted image boundary line. An image boundary line is generally included in a frame in a special effect without depending on patterns and not included in a frame in video change other than special effect, such as camera motion. For this reason, it is possible to detect a special effect generally without depending on patterns, without detecting video change other than special effects by mistake, and at high precision.

In the video special effect detection device according to the present invention, the special effect detection section preferably includes a continuously moving image boundary line frame-set period detection section configured to detect as the frame-set period including the special effect a frame-set period in which the image boundary line indicated by the image boundary line description information of respective frames moves continuously and output special effect frame-set period information as information identifying the frame-set period.

The continuously moving image boundary line frame-set period detectionsection may express parameters describing an image boundary line of each frame as a feature point in a parameter space and detect as the frame-set period including the special effect a frame-set period in which the feature point expressing the image boundary line continuously moves with time in the parameter space.

By employing such configuration, the video special effect detection device according to the present invention detects as a frame-set period including special effect a frame-set period in which an image boundary line continuously moves. In a special effect, an image boundary line continuously moves among frames. For this reason, it is possible to detect a special effect generally without depending on patterns, without detecting video change other than special effects by mistake, and at high precision. Furthermore, since a special effect is detected based not only on the presence of an image boundary line but also on whether or not the image boundary line continuously moves, it is possible to detect a special effect at higher precision compared with a configuration which detects a special effect based only on the presence of an image boundary line.

In the video special effect detection device according to the present invention, the special effect detection section preferably includes: an image boundary line combination extraction section configured to extract a combination of a plurality of image boundary lines indicated by the image boundary line description information of each frame and output image boundary line combination information as information describing the combination of image boundary lines for each frame; and an image boundary line combination having frame-set period detection section configured to judge whether or not a frame has the combination of image boundary lines by using the image boundary line combination information of respective frames, detect a frame-set period including successive frames having the combination of image boundary lines as the frame-set period including the special effect, and output special effect frame-set period information as information identifying the frame-set period.

In the video special effect detection device according to the present invention, the special effect detection section preferably includes: an image boundary line combination extraction section configured to extract a combination of a plurality of image boundary lines indicated by the image boundary line description information of each frame and output image boundary line combination information as information describing the combination of image boundary lines for each frame; and a continuously moving image boundary line combination frame-set period detection section configured to detect as the frame-set period including the special effect a frame-set period in which the combination of image boundary lines indicated by the image boundary line description information of respective frames moves continuously and output special effect frame-set period information as information identifying the frame-set period.

The image boundary line combination extraction section may extract the combination of image boundary lines when the plurality of image boundary lines forms a quadrangle or a part of quadrangle.

The continuously moving image boundary line combination frame-set period detection section may express parameters describing respective image boundary lines of the combination of image boundary lines of each frame as feature points in a parameter space and detect as the frame-set period including the special effect a frame-set period in which each of the feature points continuously moves with time in the parameter space.

By employing such configuration, the video special effect detection device according to the present invention extracts a combination of image boundary lines from a frame and detects a frame-set period including special effect based on the extracted combination of image boundary lines. An image box formed by a combination of image boundary lines is included in a frame in DVE among special effects and not included in a frame in video change other than special effects. For this reason, it is possible to detect DVE among special effects without detecting video change other than special effects by mistake and at high precision. Furthermore, since a special effect is detected based on a combination of a plurality of image boundary lines, it is possible to detect DVE among special effects at higher precision compared with a configuration which detects a special effect based only on a single image boundary line.

An effect of the present invention is that special effect in video can be detect, generally without depending on pattern of special effect, without detecting video change other than special effect by mistake, and at high precision.

This is because the image boundary line extraction section extracts from a frame an image boundary line which is included in common in a frame in a special effect and not included in a frame in video change other than special effects, and the special effect detection section detects a frame-set period including special effect based on the extracted image boundary line.

**Brief Description of Drawings**

Fig. 1 is an explanatory drawing showing examples (A) and (B) of wipe;

Fig. 2 is an explanatory drawing showing examples (A) to (I) of DVE;

Fig. 3 is a block diagram showing a special effect detection device according to a first exemplary embodiment of the present invention;

Fig. 4 is an explanatory drawing showing examples (A) to (F) of image boundary line;

Fig. 5 is an explanatory drawing showing an example of blocks for calculation of variation of motion vectors and the motion vectors;

Fig. 6 is an explanatory drawing showing examples of frame-set period including successive frames having image boundary line;

Fig. 7 is a flow chart showing operation according to the first exemplary embodiment;

Fig. 8 is a block diagram showing a special effect detection device according to a second exemplary embodiment of the present invention;

Fig. 9 is an explanatory drawing showing examples (A) to (C) of continuous movement of image boundary line frame to frame;

Fig. 10 is an explanatory drawing exemplifying a locus of feature point representing parameters describing an image boundary line, which moves continuously with time in parameter space;

Fig. 11 is a flow chart showing operation according to the second exemplary embodiment;

Fig. 12 is a block diagram showing a special effect detection device according to a third exemplary embodiment of the present invention;

Fig. 13 is an explanatory drawing showing examples (A) to (F) of combination of image boundary lines forming an image box;

Fig. 14 is a flow chart showing operation according to the third exemplary embodiment;

Fig. 15 is a block diagram showing a special effect detection device according to a fourth exemplary embodiment of the present invention;

Fig. 16 is an explanatory drawing exemplifying that feature points representing the respective image boundary lines of a combination of image boundary lines continuously move with time in parameter space;

Fig. 17 is a flow chart showing operation according to the fourth exemplary embodiment;

Fig. 18 is a block diagram showing a special effect detection device according to a fifth exemplary embodiment of the present invention;

Fig. 19 is an explanatory drawing showing that edge directions of pixels specifying an image boundary line is perpendicular to the direction of the image boundary line;

Fig. 20 is a block diagram showing a special effect detection device according to a sixth exemplary embodiment of the present invention;

Fig. 21 is a block diagram showing a special effect detection device according to a seventh exemplary embodiment of the present invention;

Fig. 22 is a block diagram showing a special effect detection device according to an eighth exemplary embodiment of the present invention;

Fig. 23 is a block diagram showing a special effect detection device according to a ninth exemplary embodiment of the present invention; and

Fig. 24 is a block diagram showing a special effect detection device according to a tenth exemplary embodiment of the present invention.

## Best Mode for Carrying Out the Invention

(First exemplary embodiment)

Next, a first exemplary embodiment of the present invention will be described with reference to the drawings.

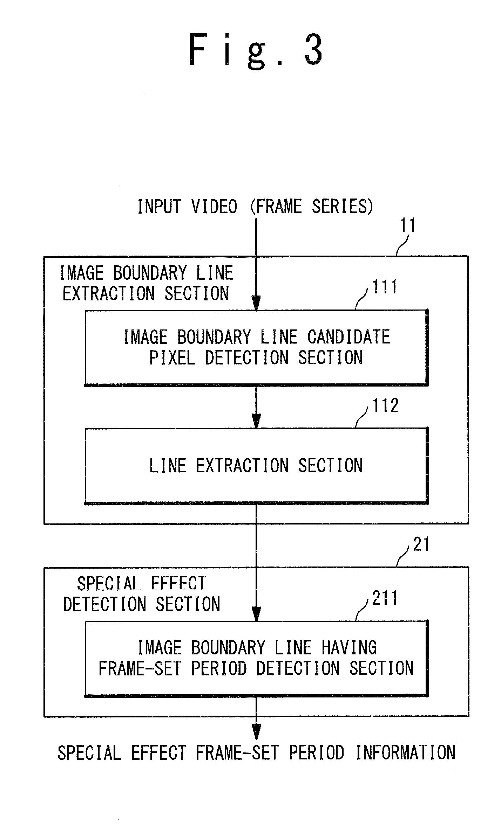

Fig. 3 is a block diagram showing a special effect detection device according to the first exemplary embodiment of the present invention. As shown in Fig. 3, the special effect detection device according to the first exemplary embodiment of the present invention includes an image boundary line extraction section 11 and a special effect detection section 21. The special effect detection device is, for example, implemented by an information processing device such as computer, which performs processing based on a program stored in a recording medium. The same can be applied to each exemplary embodiment described below.

The image boundary line extraction section 11 extracts from each frame of input video an image boundary line as a boundary line between two images in a frame; and outputs image boundary line description information as information describing the extracted image boundary line. An image boundary line means a boundary line between two images before and after transition, which coexist in a frame in a special effect. It is a characteristic of the special effect that transition is performed between images before and after transition with the images coexisting spatially. Therefore, frames forming a special effect have image boundary lines.

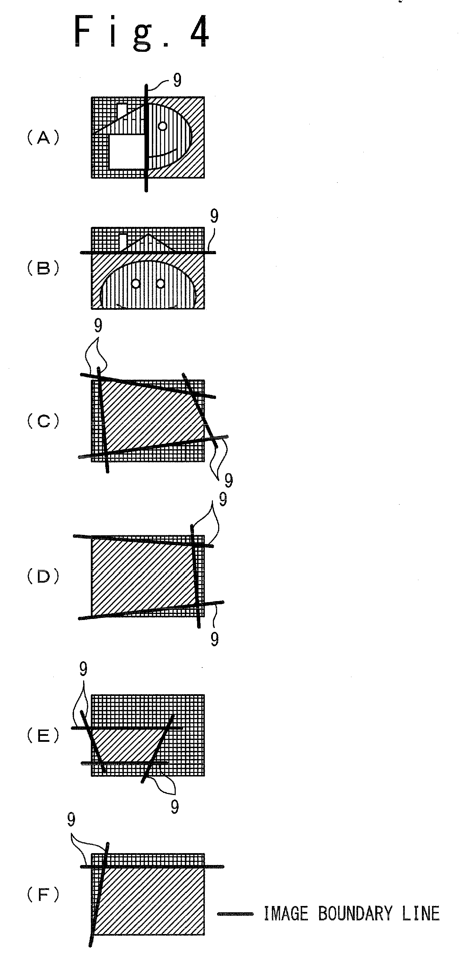

Fig. 4 is an explanatory diagram showing examples (A) to (F) of image boundary line. In (A) to (F) of Fig. 4, symbol 9 denotes image boundary line. The image boundary line does not need to be a boundary line strictly between two images existing in a frame. The image boundary line may also include a line in the frame, which moves in conjunction with the boundary line between two images existing in the frame. The image boundary line may be the line in the frame, which moves in conjunction with the boundary line between two images existing in the frame. The description for the image boundary line described here applies to all the exemplary embodiments below.

The image boundary line extraction section 11 includes an image boundary line candidate pixel detection section 111 and a line extraction section 112. The image boundary line candidate pixel detection section 111 detects image boundary line candidate pixels as candidates for pixels specifying an image boundary line from each frame of the input video. The image boundary line candidate pixel detection section 111 outputs image boundary line candidate pixel information as information identifying the detected image boundary line candidate pixels for each frame. As the pixel, a pixel included in each frame of the input video maybe used as it is or a new pixel obtained through arbitrary image processing such as resolution conversion may be used. As the frame of the input video, every frame in the input video may be used or a subset obtained through an arbitrary sampling may be used. This applies to all the exemplary embodiments below.

The image boundary line candidate pixel detection section 111 detects pixels that are consistent with a property of pixels specifying an image boundary line in a special effect, when detecting image boundary line candidate pixels. As a property of the pixels specifying the image boundary line, there is a property that the pixels specifying the image boundary line are pixels in an edge, namely, a region where image brightness steeply changes. This is because the image boundary line is a boundary between two different images. Methods of detecting a pixel in edge are various and any method among them may be used. The details of those methods are disclosed in "Handbook of Image Analysis, New Edition" pp. 1228 - 1246, for example. For example, a pixel in edge may be detected by applying an edge detection operator such as Prewitt, Sobel, Roberts, Robinson, Kirsch, Laplacian or the like, disclosed in "Handbook of Image Analysis, New Edition", to each pixel in an image. Alternatively, a pixel in edge may be detected by using an edge detection method by Canny disclosed in "A Computational Approach to Edge Detection". The pixels in edge thus detected can be taken as the image boundary line candidate pixels.

As another property of pixels specifying an image boundary line, there is a property that the pixels specifying the image boundary line have large inter-frame pixel difference values. This is because the image boundary line moves. In order to detect a pixel having a large inter-frame pixel difference value in a frame, a difference value of pixel values is obtained between corresponding pixels in the frame and a frame adjacent to that frame. Then a pixel having the difference value larger than a threshold can be taken as the pixel having the large inter-frame pixel difference value in the frame. Alternatively, it is also possible in obtaining a difference value of pixel values between frames, to obtain a difference value of pixel values not only for a frame and an adjacent frame in a direction (e.g. the next frame) but also for the frame and an adjacent frame in the opposite direction (e.g. the previous frame) to take a pixel with the both difference values larger than a threshold as the pixel having the large inter-frame pixel difference value. Here, a signal value described in any color system may be used as the pixel value. The pixel having the large inter-frame pixel difference value thus detected can be taken as an image boundary line candidate pixel.

Although a pixel that has any one of the above two properties can be taken as an image boundary line candidate pixel, it is more preferable that a pixel having both of the above properties is taken as an image boundary line candidate pixel. In this case, it is possible to separately obtain pixels having one of the properties and pixels having the other of the properties, and to take the pixel having both the properties as an image boundary line candidate pixel. Alternatively, it is also possible to firstly obtain pixels having any one of the properties and detect a pixel that further has the other property among the pixels to be taken as an image boundary line candidate pixel, for the purpose of reducing calculation costs.

In addition to the above-mentioned two properties, as another property of pixels specifying an image boundary line, there is a property that pixels specifying an image boundary line belongs to a region in which motion vectors are varied. This is because the pixels specifying the image boundary line are on a moving boundary between two images. Here, a region in which motion vectors are varied is a region for which motion vectors at a plurality of points close to each other are not uniform in direction or magnitude. In order to detect a region for which motion vectors vary, for example, for each pixel or each small region such as block, variation among motion vectors including a motion vector at the pixel or the small region and motion vectors at pixels or small regions therearound is calculated and a pixel or a small region for which the calculated variation is equal to or more than a threshold is taken as a region for which motion vectors are varied.

The image boundary line candidate pixel detection section 111, when calculating a variation among motion vectors, can obtain an average vector of the objected plurality of motion vectors and take an average value of inter-vector distances between each motion vector and the average vector as the variation among the motion vectors, for example. When a variation among motion vectors is calculated in this way, the variation among the motion vectors is 0 in case that directions and magnitudes of the objected plurality of motion vectors are uniform; the variation among the motion vectors is large in case that directions or magnitudes of the objected plurality of motion vectors are varied. A method of calculating motion vector is disclosed in "Handbook of Image Analysis, New Edition" pp. 1495 - 1498, for example.

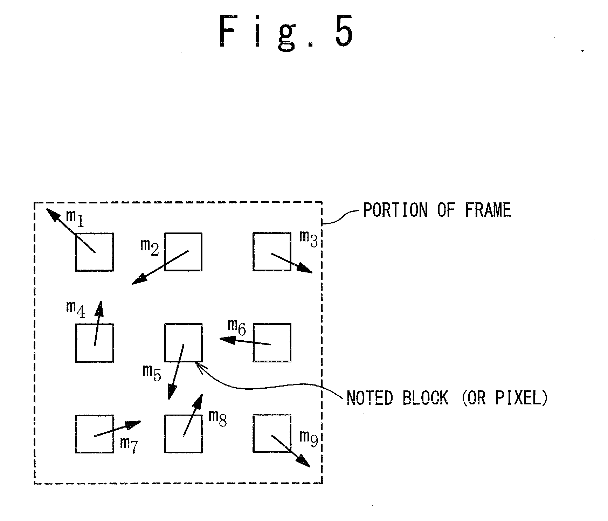

Next, a specific example will be described with reference to the drawing. Fig. 5 is an explanatory diagram showing nine blocks in total, including a block (or may be considered as a pixel) and its surrounding blocks and their motion vectors. These motion vectors are expressed by a formula (1) and an average vector of these motion vectors is expressed by a formula (2). A variation V among the motion vectors can be calculated as an average value of inter-vector distances between the motion vectors expressed by the formula (1) and the average vector expressed by the formula (2), as indicated by a formula (3).

[Formula 1]

$$(m_1, m_2, \cdots, m_9) \quad \cdots (1)$$

[Formula 2]

$$\overline{m} \quad \cdots (2)$$

[Formula 3]

$$\nu = \frac{1}{9} \sum_{i=1}^{9} \left| \overline{m} - m_i \right|^2 \quad \cdots (3)$$

The image boundary line candidate pixel detection section 111 calculates a variation among motion vectors for each block (or pixel) as described above. The image boundary line candidate pixel detection section 111 can detect every pixel that belongs to a block (or pixel) with the calculated variation among motion vectors being equal to or above a certain threshold value, as a pixel that belongs to a region where motion vectors are varied. The method of detecting a pixel that belongs to a region where motion vectors are varied described here is one example and not the only choice. A pixel that belongs to a region where motion vectors are varied thus detected can be taken as an image boundary line candidate pixel.

Every pixel that belongs to a region where motion vectors are varied can be taken as an image boundary line candidate pixel without additional condition. It is preferable to take a pixel that belongs to a region where motion vectors are varied and has any or both of the above described tow properties, as an image boundary line candidate pixel.

Additionally, the image boundary line candidate pixel detection section 111 may extract pixels surrounding the detected image boundary line candidate pixel by expansion processing and add the surrounding pixels as the image boundary line candidate pixels. Image boundary line candidate pixel information may be any information which identifies image boundary line candidate pixels detected for each frame. The image boundary line candidate pixel information may be binary image information which expresses with two values as for each pixel in a frame, whether or not the pixel is an image boundary line candidate pixel. Or, the image boundary line candidate pixel information may be a list indicating positions of all image boundary line candidate pixels which are detected.

The line extraction section 112 inputs the image boundary line candidate pixel information of each frame, outputted by the image boundary line candidate pixel detection section 111, and extracts a line specified by the image boundary line candidate pixels indicated by the image boundary line candidate pixel information as an image boundary line for each frame. Then the line extraction section outputs image boundary line description information which describes the extracted image boundary line for each frame. Here, a plurality of image boundary lines may be extracted for each frame.

The line which is specified by the image boundary line candidate pixels and extracted by the line extraction section 112 can be limited to a strait line sine an image boundary line in special effect is usually a strait line. However, since special effects may include image boundary lines other than strait lines, for example curved lines, in rare case, when such special effect is the object of detection, the line which is specified by the image boundary line candidate pixels and extracted by the line extraction section 112 should not be limited to a strait line. As a method of extracting a line specified by image boundary line candidate pixels, any method of extracting a line based on a set of pixels can be used. An example of a method of extracting a line is disclosed in "Handbook of Image Analysis, New Edition" pp. 1246 - 1260, for example.

It is preferable to use Hough transform as a method of extracting a line specified by image boundary line candidate pixels. The Hough transform is a method of extracting from an image a pattern (e.g. a straight line, a circle, an ellipse, and a parabola) which canbe described with parameters based on voting in parameter space. The Hough transform is especially effective as a method of extracting a straight line. An extraction method for a straight line by using the Hough transform is disclosed in "Handbook of Image Analysis, New Edition" pp. 1254 - 1256, for example. In the Hough transform in which image boundary line candidate pixels are used as input, voting is conducted in parameter space for every straight line that passes each image boundary line candidate pixel, and the line extraction section 112 extracts a straight line with a large number of votes. The line extraction section 112 can take the straight line extracted by the Hough transform in which image boundary line candidate pixels are used as input, as an image boundary line.

Since the Hough transform can extract any pattern which can be described with parameters, the Hough transform is also applicable to a case that an image boundary line other than a straight line, e.g. a curved line, is the object of extraction. Additionally, generalized Hough transform disclosed in "Handbook of Image Analysis, New Edition" pp. 1256 - 1258 can detect a pattern of arbitrary form. With the use of the generalized Hough transform, an image boundary line of arbitrary form can be extracted.

Additionally, the line extraction section 112 may inspect whether or not image boundary line candidate pixels specifying an image boundary line, continuously exist along the image boundary line. When the image boundary line candidate pixels do not continuously exist, the line extraction section 112 may regard the image boundary line as inappropriate and exclude the image boundary line. For example, the line extraction section 112 measures a length in which image boundary line candidate pixels continuously exist along an image boundary line and excludes the image boundary line with the length equal to or below a certain threshold value.

Image boundary line description information is information describing an image boundary line extracted from each frame. When an image boundary line is a straight line, image boundary line description information may be multidimensional parameters describing the straight line. In the case of extracting a straight line using the Hough transform for example, the straight line is expressed as $\rho = x\cos\theta + y\sin\theta$, where $\rho$ is the length of perpendicular dropped from the origin of a $(x, y)$ coordinate system def ined for a frame to the straight line, and $\theta$ is an angle between the perpendicular and the horizontal axis (x-axis). In this case, two-dimensional parameters $(\rho, \theta)$ may be used as image boundary line description information.

Or, a list describing positions of all pixels forming an image boundary line may be used as image boundary line description information. However, in case that image boundary line description information is supplied to an edge direction calculation section 131 according to a sixth exemplary embodiment mentioned later, image boundary line description information must be information which identifies all pixels forming an image boundary line. Or, in case that image boundary line description information is supplied to a image boundary line having frame-set period detection section 211 mentioned later (the first exemplary embodiment and so forth), image boundary line description information may be binary information indicating whether or not each frame includes an image boundary line in correspondence to processing performed by the image boundary line having frame-set period detection section 211. The description about the image boundary line description information mentioned here can be applied to all the exemplary embodiments below.

The special effect detection section 21 detects a frame-set period which includes special effect by using image boundary line description information for respective frames outputted by the image boundary line extraction section 11, and outputs special effect frame-set period information as information identifying the detected frame-set period.

The special effect detection section 21 includes the image boundary line having frame-set period detection section 211. The image boundary line having frame-set period detection section 211 judges whether or not a frame has an image boundary line for each frame by using the image boundary line description information for respective frames outputted by the image boundary line extraction section 11. Then, the image boundary line having frame-set period detection section 211 detects a frame-set period including successive frames having image boundary line as a frame-set period including special effect. The image boundary line having frame-set period detection section 211 outputs special effect frame-set period information as information which identifies the detected frame-set period. Here, the frame-set period including successive frames having image boundary line does not necessarily need to have an image boundary line in every frame. It is possible to allow a prescribed number of frames that do not have image boundary lines, to be included in the frame-set period. Additionally, a frame-set period to be detected does not necessarily need to be a frame-set period that includes a plurality of frames. A single frame having an image boundary line may be detected as a frame-set period including special effect.

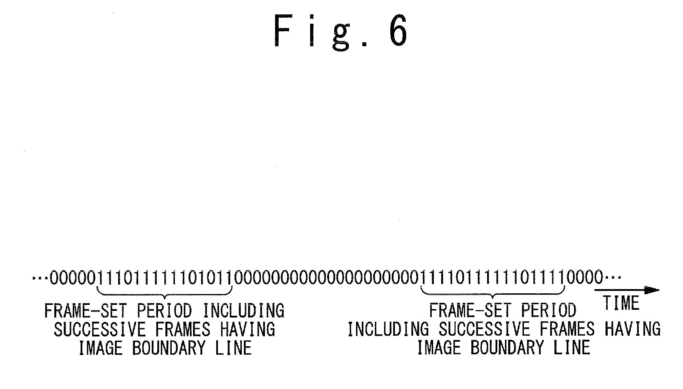

As one example of a method of detecting a frame-set period including successive frames having image boundary line, there is a method in which N is set as a minimum value of the number of frames in a frame-set period to be detected, when the number of frames in a frame-set period including successive frames having image boundary line is N or more, the frame-set period is detected. Here, it is possible to allow a prescribed number of frames that do not have image boundary lines, to be included in the frame-set period. Since a special effect is formed by a plurality of frames, a number of 2 or above is usually set for N. For example, it is preferable to set N as a minimum value of the numbers of frames included in respective special effect periods in video provided for learning. Fig. 6 is an explanatory diagram showing one example of a frame-set period including successive frames having image boundary line. In Fig. 6, frame series of video is shown as time series of 1 and 0, where 1 denotes a frame having an image boundary line and 0 denotes a frame having no image boundary line. In this example, a frame having no image boundary line is allowed to be included in a frame-set period.

The special effect frame-set period information is information identifying the detected frame-set period including special effect and is, for example, information indicating the first frame and the last frame of the frame-set period. The description about the special effect frame-set period information mentioned here can be applied to all the exemplary embodiments below.

The special effect frame-set period information outputted as mentioned above can be used for controlling replay of input video. That is, a video replay control device for controlling replay of input video based on the special effect frame-set period information outputted by the special effect detection device can be provided in addition to the above mentioned constitution. A video replay device including such special effect detection device and such video replay control device can control replay by using the frame-set period indicated by the special effect frame-set period information as a candidate for a starting point of the replay or a candidate for an ending point of the replay, for example.

For example, the video replay control device may use arbitrary frame in the frame-set period indicated by the special effect as a candidate for a starting point of the replay and execute the replay from the candidate for the starting point in response to a direction of replay (e.g. operation of remote controller) from a user. The first frame and the last frame of the frame-set period indicated by the special effect frame-set period information are referred to as a frame F1 and a frame F2 respectively. Videos before and after the special effect frame-set period are referred to as video A and video B respectively. The video replay control device may stop replaying at the frame F2 based on a direction of replay of the video A and start replay from the frame 1 based on a direction of replay of the video B.

As mentioned in the description of the background art, the special effect is used for an important point of video in terms of meaning and a point which is especially wanted to be emphasized by the editor. For example, the video special effect is used for starting points of new section and topic, a transition point of scene, and so forth. Therefore, by controlling replay with the use of special effect frame-set period information outputted by the special effect detection device, video viewing is possible in a unit, such as section and topic, important in terms of meaning of video. For this reason, it is possible to quickly access a portion of video being wanted to be viewed and provide effective viewing. Additionally, it can be applied to all the exemplary embodiments below that the special effect frame-set period information outputted by the special effect detection device can be used for controlling replay of input video as mentioned here. That is, in addition to the special effect detection device according to every exemplary embodiment below, it is possible to provide a video replay control device for controlling replay of input video based on the special effect frame-set period information outputted by the special effect detection device.

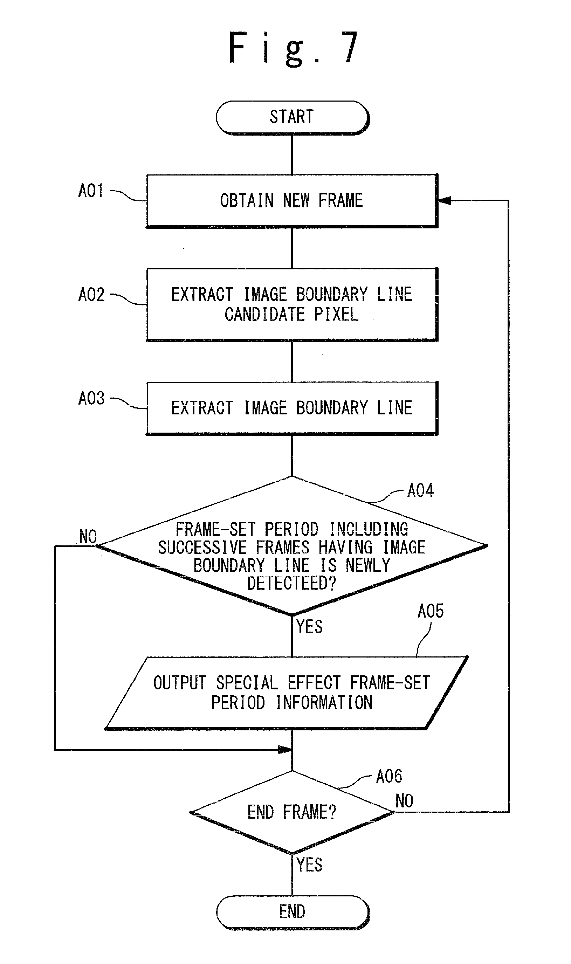

Next, with reference to a flow chart in Fig. 7, operation according to the first exemplary embodiment will be described. First, a new frame is obtained from input video and supplied to the image boundary line candidate pixel detection section 111 (step A01). Here, the new frame is a start frame when the step A01 is performed for the first time. Next, the image boundary line candidate pixel detection section 111 detects image boundary line candidate pixels from the frame and outputs image boundary line candidate pixel information identifying the detected image boundary line candidate pixels (step A02).

Next, the line extraction section 112 extracts a line specified by the image boundary line candidate pixels indicated by the image boundary line candidate pixel information as an image boundary line, and outputs image boundary line description information describing the extracted image boundary line (step A03). Next, the image boundary line having frame-set period detection section 211 newly detects a frame-set period including successive frames having image boundary line by using image boundary line description information outputted up to the present frame (step A04). In order to prevent overlapping among detected frame-set periods, for example only when a frame-set period including a image boundary line ends at the present frame, the frame-set period is detected. Step A05 follows when a frame-set period including successive frames having image boundary line is newly detected. Step A06 follows otherwise.

When the frame-set period including successive image boundary lines is newly detected, the image boundary line having frame-set period detection section 211 takes the frame-set period as a frame-set period including special effect and outputs special effect frame-set period information identifying the frame-set period (step A05). Finally, the present frame is judged whether or not to be an end frame (step A06) and the processing is ended in the case of the end frame. The step A01 follows when the present frame is not the end frame, and the next frame of the video is obtained as a new frame to continue the processing. In this way, the processing of the steps A01 to A06 is performed until reaching the end frame.

In the first exemplary embodiment, properties are used that an image boundary line is generally included in a frame in special effect without depending on patterns but is not included in a frame in video change other than special effect, such as camera motion. In the first exemplary embodiment, the image boundary line extraction section 11 extracts an image boundary line from a frame and the special effect detection section 21 detects a frame-set period including special effect based on the extracted image boundary line. Therefore, the first exemplary embodiment has effect that a special effect can be detected without depending on patterns, generally, without detecting video change other than special effect by mistake, and at high precision.

(Second exemplary embodiment)

Next, a second exemplary embodiment of the present invention will be described with reference to the drawings.

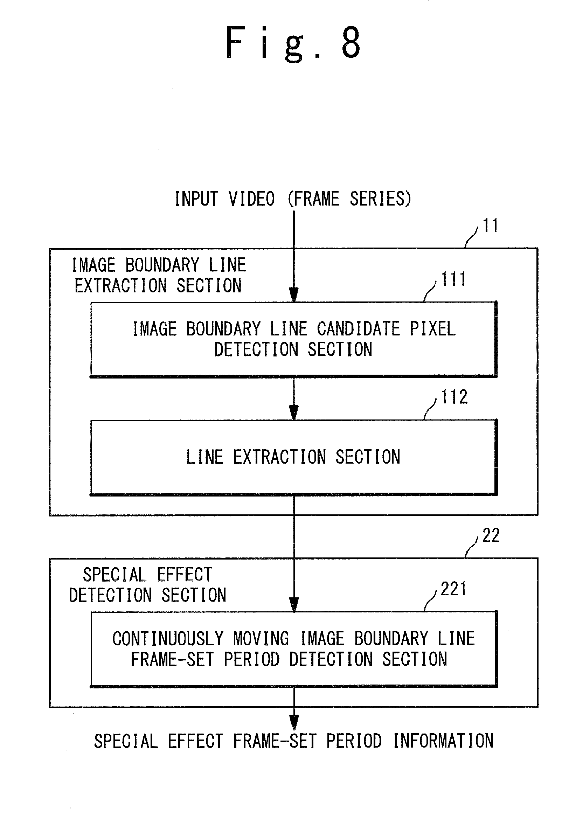

Fig. 8 is a block diagram showing a special effect detection device according to the second exemplary embodiment of the present invention. As shown in Fig. 8, the special effect detection device according to the second exemplary embodiment of the present invention includes an image boundary line extraction section 11 and a special effect detection section 22. The second exemplary embodiment is different from the first exemplary embodiment in that the special effect detection section 21 shown in Fig. 3 according to the first exemplary embodiment is replaced by the special effect detection section 22. The image boundary line detection section 11 is the same as the image boundary line extraction section 11 in the first exemplary embodiment, and its explanation will be omitted.

The special effect detection section 22, as in the case of the special effect detection section 21 according to the first exemplary embodiment, detects a frame-set period including special effect by using image boundary line description information of respective frames outputted by the image boundary line extraction section 11, and outputs special effect frame-set period information identifying the frame-set period. However, the configuration is different from the special effect detection section 21 according to the first exemplary embodiment.

The special effect detection section 22 includes a continuously moving image boundary line frame-set period detection section 221. The continuously moving image boundary line frame-set period detection section 221 detects a frame-set period in which an image boundary line indicated by image boundary line description information of respective frames outputted by the image boundary line extraction section 11 continuously moves, as a frame-set period including special effect. The continuously moving image boundary line frame-set period detection section 221 outputs special effect frame-set period information as information identifying the detected frame-set period.

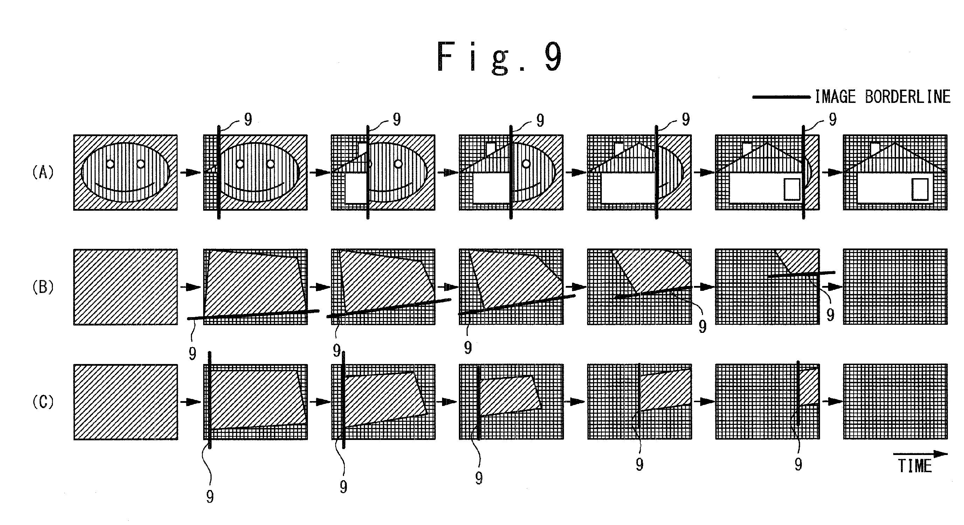

In the special effect, image boundary lines 9 continuously move from frame to frame as illustrated in (A) to (C) of Fig. 9. Here, continuous movement of the image boundary line 9 means the state of the image boundary line 9 moving among frames such that its position and slope gradually change with time elapsed. In the example shown in (A) of Fig. 9, a vertical image boundary line 9 continuously moves to cross a frame from the left to the right. In the example shown in (B) of Fig. 9, an image boundary line 9 of lower side gradually moves from the bottom to the top of a frame. In the example shown in (C) of Fig. 9, an image boundary line 9 of left side gradually moves from the left to the right of a frame.

As one example of a method of detecting a frame-set period in which an image boundary line continuously moves, there is a method in which parameters describing an image boundary line are expressed as a feature point in parameter space and a frame-set period is extracted in which the feature point representing the image boundary line continuously moves with time elapsed in the parameter space. Here, a specific example will be indicated by using the two-dimensional parameters (p, θ) mentioned in the first exemplary embodiment as parameters describing an image boundary line.

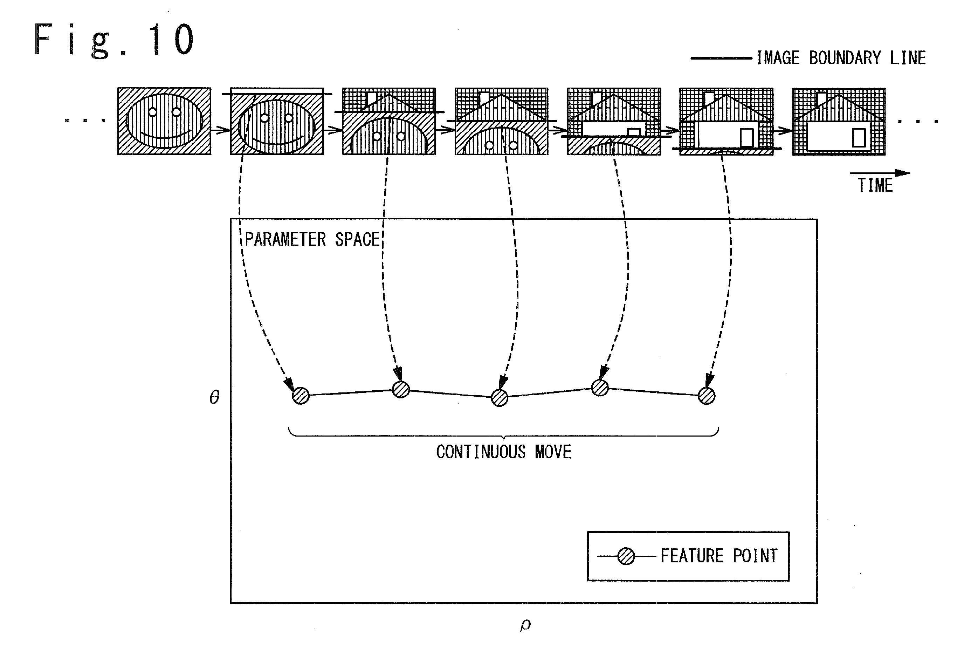

Fig. 10 is an explanatory diagram in which an image boundary line extracted by the image boundary line extraction section 11 from a frame-set period including special effect is expressed with two-dimensional parameters (p, θ) and is plotted as a feature point in two-dimensional parameter space of ρ-θ. Since an image boundary line in special effect continuously moves among frames, the feature point indicating the parameters describing the image boundary line also continuously moves with time elapsed in the parameter space to depict a locus as shown in Fig. 10. When continuity between feature points is judged by evaluating distances between the feature points in the parameter space, it is possible to extract a frame-set period in which a feature point indicating an image boundary line continuously moves with time elapsed in the parameter space. For example, a distance in parameter space between feature points indicating image boundary lines extracted from adjacent frames is calculated and the image boundary lines of these frames are judged to be continuous when the distance is a certain threshold value or less.

The continuously moving image boundary line frame-set period detection section 221 successively performs this processing for the adjacent frames. When a frame-set period in which feature points are judged to be continuous has a certain number of frames or more, the continuously moving image boundary line frame-set period detection section 221 can detect the frame-set period as a frame-set period in which an image boundary line continuously moves. The continuously moving image boundary line frame-set period detection section 221 may predict a feature point for judging continuity between feature points in the parameter space. For example, when judging whether a feature point indicating an image boundary line extracted from a frame (referred to as the present frame) is continuous from a feature point indicating an image boundary line extracted from a past frame before the present frame, the continuously moving image boundary line frame-set period detection section 221 calculates a prediction point of a feature point of the present frame from the feature point of the past frame, calculates the distance between the prediction point and a feature point actually extracted from the present frame, and makes a judgment of continuity when the distance is within a certain threshold value. The continuously moving image boundary line frame-set period detection section 221 may allow an exception value as a certain constant when judging continuity of feature points in the parameter space.

Additionally, as shown in (A) to (C) of Fig. 9, in a general special effect, the image boundary line 9 moves continuously from one end to another end of a frame. The end of a frame means a region within the frame in the vicinity of the fringe of the frame. In the general special effect, an image boundary line appears at an end of a frame first, moves continuously within the frame with time elapsed, and finally disappears at another end of the frame.

In the example shown in (A) of Fig. 9, the image boundary line 9 continuously moves from the left end to the right end of a frame. Therefore, the continuously moving image boundary line frame-set period detection section 221 may detect a frame-set period in which an image boundary line continuously moves from an end to another end of a frame, as a frame-set period including special effect. For example, the continuously moving image boundary line frame-set period detection section 221 can detect a frame-set period in which an image boundary line continuously moves from an end to another end of a frame by selecting a frame-set period of which the first frame includes an image boundary line existing at an end of frame and of which the last frame includes an image boundary line existing at another end of frame, among frame-set periods in which image boundary lines continuously move. The continuously moving image boundary line frame-set period detection section 221, in judging whether or not an image boundary line exists at an end of a frame, calculates a distance from the fringe of the frame to the image boundary line and can judge that the image boundary line exists at the end of frame when the distance is within a certain threshold value and that the image boundary line does not exist at the end of frame when the distance is above the threshold value, for example.

Since a special effect is gradual change in which videos before and after transition are switched with their spatial occupancy ratio gradually changing, an image region having a decreasing area with time and an image region having an increasing area with time of the two image regions (e.g. the left and right image regions in the case of a lengthwise image boundary line and the top and bottom image regions in the case of a lateral image boundary line) separated by an image boundary line belong to the video before transition and the video after transition respectively. For this reason, the image region with a decreasing area with time is not similar to a frame of the video after transition and is partly similar to a frame of the video before transition. On the other hand, the image region having an increasing area with time is not similar to the frame of the video before transition and is partly similar to the frame of the video after transition.

The continuously moving image boundary line frame-set period detection section 221, when a frame-set period in which an image boundary line continuously moves further satisfies the properties, may detect the frame-set period as a frame-set period including special effect. That is, the continuously moving image boundary line frame-set period detection section 221 may detect a detected frame-set period in which a image boundary line continuously moves as a frame-set period including special effect when the detected frame-set period further satisfies in each frame at least one property or a combination of a plurality of properties:

(a) an image region having a decreasing area with time of two image regions separated by an image boundary line of the frame is not similar to a frame after the frame-set period;
(b) an image region having a decreasing area with time of two image regions separated by an image boundary line of the frame is similar to a frame before the frame-set period;
(c) an image region having an increasing area with time of two image regions separated by an image boundary line of the frame is not similar to a frame before the frame-set period; and
(d) an image region having an increasing area with time of two image regions separated by an image boundary line of the frame is similar to a frame after the frame- set period. Here, the frame before/after the frame-set period may be a frame immediately before/after the frame-set period and also may be a frame before/after the frame-set period by a given number. Additionally, a plurality of frames before/after the frame-set period, for example, N frames before/ after the frame-set period (N is the number of frames), may be used in place of a frame before/after the frame-set period.

Here, in order to distinguish between an image region having a decreasing area with time and an image region having an increasing area with time of the two image regions separated by an image boundary line, the areas of the two image regions of the frame are compared with the areas of two image regions separated by an image boundary line of a frame before and after the frame.

Various methods may be used to judge similarity between the image region and the frame. As one example, there is a method in which similarity (or a distance) between the image region and the frame is calculated by using a statistical property (image feature) of pixels included respectively in the image region and the frame, and the image region and the frame are judged whether or not to be similar through threshold processing. Here, the statistical property (image feature) of pixels is histogram of luminance or color, average value of luminance or color, variance of luminance or color, texture information, or so forth, for example. The continuously moving image boundary line frame-set period detection section 221 may make a judgment of similarity for each frame and detect a frame-set period as a frame-set period including special effect when the percentage of frames satisfying the above mentioned property is above a certain percentage.

Alternatively, continuously moving image boundary line frame-set period detection section 221 may only calculate a similarity for each frame, calculate a similarities for the whole frame-set period (a similarity between an increasing image region and a frame before the frame-set period, a similarity between an increasing image region and a frame after the frame-set period, a similarity between a decreasing image region and a frame before the frame-set period, or a similarity between a decreasing image region and a frame after the frame-set period), judge whether or not the above property is satisfied for the whole frame-set period, and detect the frame-set period as a frame-set period including special effect when the above property is satisfied.

The continuously moving image boundary line frame-set period detection section 221, when judging similarities between image regions separated by an image boundary line and frames before and after a frame-set period, does not need to use the whole image region but can judge similarities between the image regions and the frames before and after the frame-set period by using only portions of the image regions. For example, the continuously moving image boundary line frame-set period detection section 221 may use only an image region closer to the image boundary line in the image region separated by the image boundary line. Or, the continuously moving image boundary line frame-set period detection section 221 may use only an image region between image boundary lines of the present and adjacent frames in the image region separated by the image boundary line.

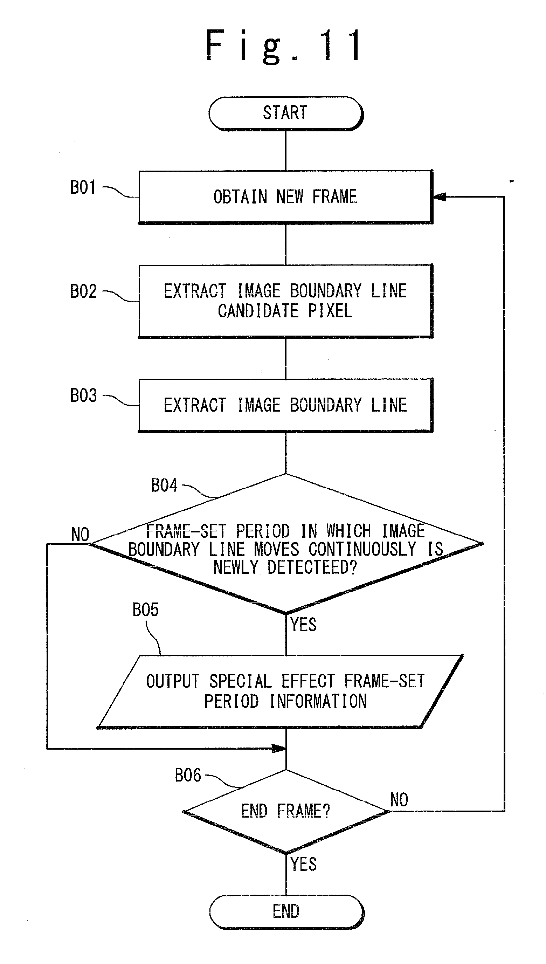

Next, with reference to a flow chart in Fig. 11, operation according to the second exemplary embodiment will be described. First, a new frame is obtained from input video and supplied to the image boundary line candidate pixel detection section 111 (step B10). Here, the new frame is a start frame when the step B01 is performed for the first time. Next, the image boundary line candidate pixel detection section 111 detects image boundary line candidate pixels from the frame and outputs image boundary line candidate pixel information identifying the detected image boundary line candidate pixels (step B02).

Next, the line extraction section 112 extracts a line specified by image boundary line candidate pixels indicated by the image boundary line candidate pixel information as an image boundary line, and outputs image boundary line description information describing the extracted image boundary line (step B03). Next, the continuously moving image boundary line frame-set period detection section 221 newly detects a frame-set period in which the image boundary line indicated by the image boundary line description information continuously moves by using image boundary line description information outputted up to the present frame (step B04). In order to prevent overlapping among detected frame-set periods, for example, only when a frame-set period including a image boundary line ends at the present frame, the continuously moving image boundary line frame-set period detection section 221 detects the frame-set period. Step B05 follows when a frame-set period in which an image boundary line continuously moves is newly detected. Step B06 follows otherwise.

When the frame-set period in which the image boundary line is continuous is newly detected, the continuously moving image boundary line frame-set period detection section 221 takes the frame-set period as a frame-set period including special effect and outputs special effect frame-set period information identifying the frame-set period (step B05). Finally, the present frame is judged whether or not to be an end frame (step B06) and the processing is ended in the case of the end frame. The step B01 follows when the present frame is not the end frame, and the next frame of the video is obtained as a new frame to continue the processing. In this way, the processing of the steps B01 to B06 is performed until reaching the end frame.

In the second exemplary embodiment, a property is used that an image boundary line continuously moves among frames in special effect. Since a frame-set period in which an image boundary line continuously moves is detected as a frame-set period including special effect in the second exemplary embodiment, there is effect that a special effect can be detected without depending on patterns, generally, without detecting video change other than special effect by mistake, and at high precision as in the case of the first exemplary embodiment. Furthermore, according to the second exemplary embodiment, a special effect is detected based not only on the presence of an image boundary line but also on whether or not the image boundary line continuously moves. Therefore, the second exemplary embodiment has effect that a special effect can be detected with higher precision compared with the first exemplary embodiment in which a special effect is detected based on the presence of an image boundary line.

(Third exemplary embodiment)

Next, a third exemplary embodiment of the present invention will be described with reference to the drawings.

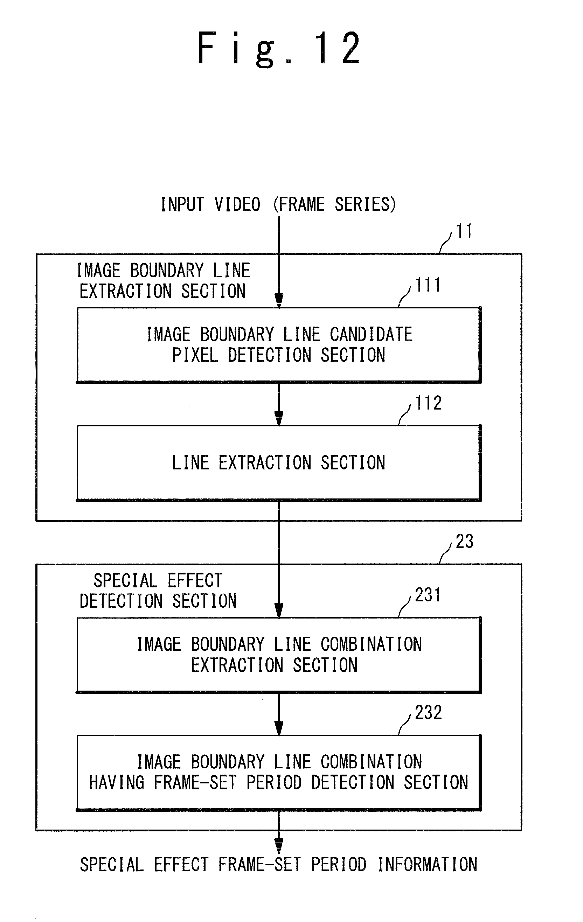

Fig. 12 is a block diagram showing a special effect detection device according to the third exemplary embodiment of the present invention. As shown in Fig. 12, the special effect detection device according to the third exemplary embodiment of the present invention includes an image boundary line extraction section 11 and a special effect detection section 23. The third exemplary embodiment is different from the first exemplary embodiment in that the special effect detection section 21 shown in Fig. 3 according to the first exemplary embodiment is replaced by the special effect detection section 23. The image boundary line detection section 11 is the same as the image boundary line detection section 11 in the first exemplary embodiment, and its explanation will be omitted.

The special effect detection section 23, as in the case of the special effect detection section 21 according to the first exemplary embodiment, detects a frame-set period including special effect by using image boundary line description information of respective frames outputted by the image boundary line extraction section 11, and outputs special effect frame-set period information identifying the frame-set period. However, the special effect detection section 23 is different in configuration from the special effect detection section 21 according to the first exemplary embodiment.

The special effect detection section 23 includes an image boundary line combination extraction section 231 and an image boundary line combination having frame-set period detection section 232. The image boundary line combination extraction section 231 extracts a combination of a plurality of image boundary lines indicated by image boundary line description information of respective frames outputted by the image boundary line extraction section 11. The image boundary line combination extraction section 231 outputs image boundary line combination information as information describing the extracted combination of image boundary lines, for each frame. Here, it is preferable that the combination of image boundary lines is a combination forming an image box in a frame in DVE among special effects and the image box indicates a displaying region for video superimposed on the other of two videos before and after transition.

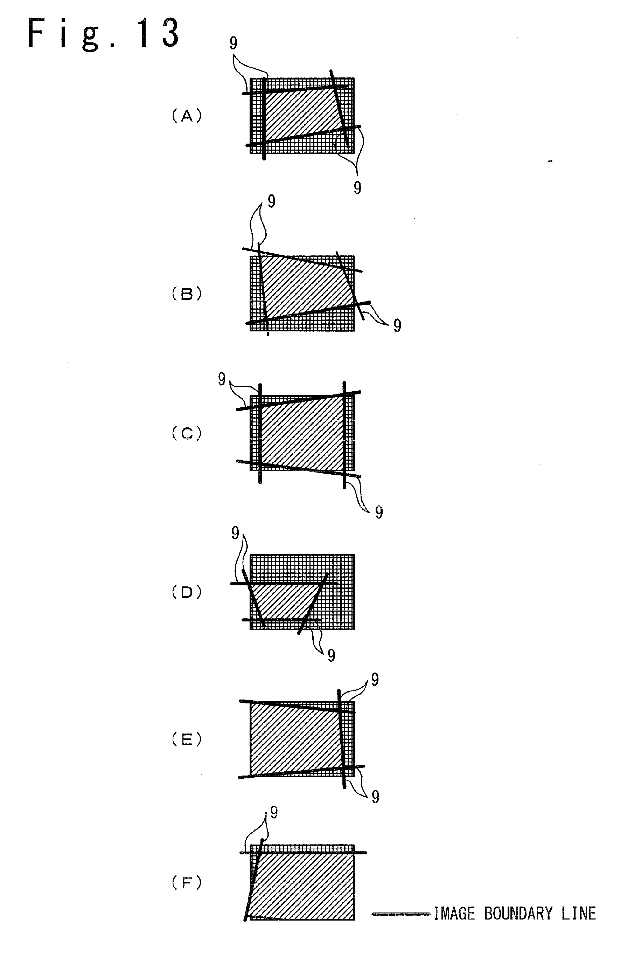

Fig. 13 is an explanatory diagram showing examples (A) to (F) of a combination of image boundary lines 9 which form the above-mentioned image box. Since an image box is usually a quadrangle as shown in (A) to (F) of Fig.

13, a combination of image boundary lines to be extracted by the image boundary line combination extraction section 231 may be limited to a combination of image boundary lines which form a quadrangle. However, there is DVE in which an image box is a pattern other than a quadrangle, and thus, a combination of image boundary lines to be extracted by the image boundary line combination extraction section 231 should not be limited to a combination of image boundary lines which form a quadrangle when such DVE is the object of detection.

As shown in (E) and (F) of Fig. 13, an image box formed by the image boundary lines 9 may protrude from a frame, and thus, a combination of image boundary lines to be extracted by the image boundary line combination extraction section 231 does not need to be a combination of image boundary lines which form a close pattern. For example, a combination of image boundary lines to be extracted by the image boundary line combination extraction section 231 may be a combination of image boundary lines 9 which form a part (which however, is two sides or more) of a quadrangle as shown in (E) and (F) of Fig. 13.

Here, one example of a method of extracting a combination of image boundary lines will be indicated for the case in which a combination of image boundary lines to be extracted by the image boundary line combination extraction section 231 is limited to a combination of image boundary lines which forms a quadrangle or a part of a quadrangle. In order to extract a combination of plurality of image boundary lines which form a quadrangle (or a part of a quadrangle) in a frame, all combinations from a plurality of image boundary lines extracted from the frame by the image boundary line extraction section 11 are searched to find a combination of image boundary lines which form a quadrangle (or a part of a quadrangle) satisfying conditions determined in advance. Examples of the conditions determined in advance are the size of a quadrangle, positions of intersections of image boundary lines, and angles of intersections of image boundary lines. These conditions can be set based on the investigating of quadrangular image boxes of special effect included in videos provided for learning, for example.

Image boundary line combination information is information describing the combination of image boundary lines extracted in each frame. For example, the image boundary line combination information is may be a set of image boundary line description information for describing respective image boundary lines of the extracted combination of image boundary lines (see the first exemplary embodiment for the image boundary line description information). When image boundary line combination information is supplied to the image boundary line combination having frame-set period detection section 232 mentioned later (the third exemplary embodiment and so forth), the image boundary line combination information may be binary information indicating whether or not each frame has a combination of image boundary lines in correspondence to processing performed by the image boundary line combination having frame-set period detection section 232. The description for the image boundary line combination information described here applies to all the exemplary embodiments below.

The image boundary line combination having frame-set period detection section 232 judges whether or not a frame has a combination of image boundary lines for each frame by using image boundary line combination information of respective frames outputted by the image boundary line combination extraction section 231. The image boundary line combination having frame-set period detection section 232 detects a frame-set period including successive frames having combination of image boundary lines as a frame-set period including special effect, and outputs special effect frame-set period information as information identifying the frame-set period. The frame-set period including successive frames having combination of image boundary lines to be detected here does not necessarily need to include a combination of image boundary lines in every frame. It is possible to allow a certain prescribed number of frames which do not have combinations of image boundary lines, to be included within a frame-set period. The frame-set period to be detected here does not necessarily need to be a frame-set period including a plurality of frames. A single frame having a combination of image boundary lines may be detected as a frame-set period including special effect.

A method of detecting a frame-set period including successive frames having combination of image boundary lines may be the same as the method of detecting a frame-set period including successive frames having image boundary line, which is described in the description of the image boundary line having frame-set period detection section 211 in the first exemplary embodiment, for example. However, it is not easy to detect a combination of image boundary lines from every frame forming special effect (since a quadrangular image box as the object of detection becomes smaller, for example). In addition, the number of frames in which a combination of image boundary lines can be detected, is often limited. Therefore, it is preferable to set a minimum value N of the number of frames in a frame-set period to be detected by the image boundary line combination having frame-set period detection section 232 to be smaller than a minimum value N set for the image boundary line having frame-set period detection section 211. N=1 is also effective.

The image boundary line combination having frame-set period detection section 232 may further analyze a temporal change in area of a pattern formed by a combination of image boundary lines through respective frames in the detected frame-set period including successive frames having combination of image boundary lines. The image boundary line combination having frame-set period detection section 232 may detect the above-mentioned frame-set period as a frame-set period including special effect when the temporal change in area satisfies certain criteria. For example, the image boundary line combination having frame-set period detection section 232 may detect the above-mentioned frame-set period as a frame-set period including special effect when the area of the pattern formed by combination of image boundary lines monotonically increase or decrease with time elapsed through respective frames.

For example, as shown in (A) to (H) of Fig. 2, this is because an area of an image box which is formed by a combination of image boundary lines in DVE among special effects and indicates a displaying region for video superimposed on the other of tow videos before and after transition, usually monotonically increases (e.g. (A), (D), (F), and (H) of Fig. 2) or monotonically decreases (e.g. (B), (C), (E), and (G) of Fig. 2). In case that a frame-set period including successive frames having combination of image boundary lines is detected as a frame-set period including special effect when an area of pattern formed by combination of image boundary lines monotonically increase or decrease with time elapsed through respective frames as described above, there is the effect of detecting DVE among special effects with high precision.

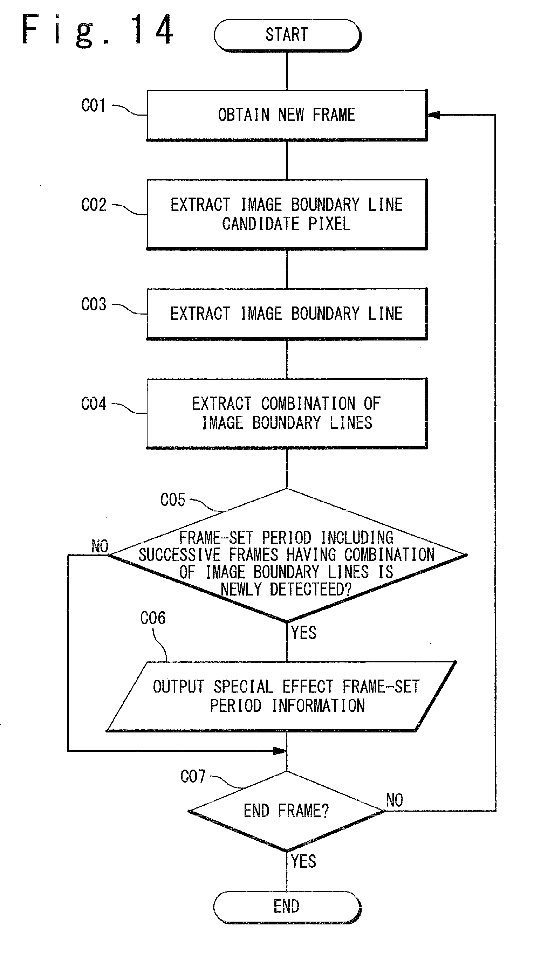

Next, with reference to a flow chart in Fig. 14, operation according to the third exemplary embodiment will be described. First, a new frame is obtained from input video and supplied to the image boundary line candidate pixel detection section 111 (stepC01). Here, the new frame is a start frame when the step C01 is performed for the first time. Next, the image boundary line candidate pixel detection section 111 detects image boundary line candidate pixels from the frame and outputs image boundary line candidate pixel information identifying the detected image boundary line candidate pixels (step C02).

Next, the line extraction section 112 extracts a line specified by image boundary line candidate pixels indicated by image boundary line candidate pixel information as an image boundary line, and outputs image boundary line description information describing the extracted image boundary line (step C03). Next, an image boundary line combination extraction section 231 extracts a combination of a plurality of image boundary lines indicated by the image boundary line description information and outputs image boundary line combination information describing the extracted combination of image boundary lines (step C04) .

Next, the image boundary line combination having frame-set period detection section 232 newly detects a frame-set period including successive frames having combination of image boundary lines by using image boundary line description information outputted up to the present frame (step C05) . In order to prevent overlapping among detected frame-set periods, for example, only when a frame-set period including combination of image boundary lines ends at the present frame, the frame-set period is detected. Step C06 follows when a frame-set period including successive frames having combination of image boundary lines is newly detected. Step C07 follows otherwise.

When the frame-set period including successive frames having combination of image boundary lines is newly detected, the image boundary line combination having frame-set period detection section 232 takes the frame-set period as a frame-set period including special effect and outputs special effect frame-set period information identifying the frame-set period (step C06) . Finally, the present frame is judged whether or not to be an end frame (step C07) and the processing is ended in the case of the end frame. The step C01 follows when the present frame is not the end frame, and the next frame of the video is obtained as a new frame to continue the processing. In this way, the processing of the steps C01 to C07 is performed until reaching the end frame.

In the third exemplary embodiment, a property is used that an image box formed by combination of image boundary lines is included in frames in DVE among special effects and not included in frames in video change other than special effects. In the third exemplary embodiment, a combination of image boundary lines is extracted from a frame and a frame-set period including special effect is detected based on the extracted combination of image boundary lines. Therefore, there is effect that DVE among special effects can be detected with high precision without detecting video change other than special effect by mistake. Furthermore, a special effect is detected based on a combination of a plurality of image boundary lines in the third exemplary embodiment. Therefore, there is effect that DVE among special effects can be detected with higher precision compared with the first exemplary embodiment in which a special effect is detected based on only a single image boundary line.

(Fourth exemplary embodiment)

Next, a fourth exemplary embodiment of the present invention will be described with reference to the drawings.

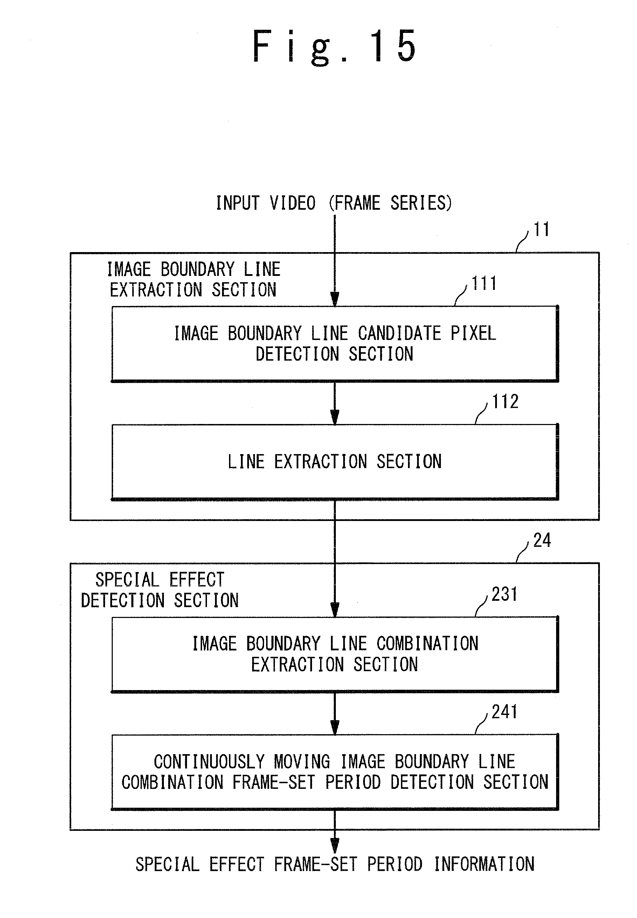

Fig. 15 is a block diagram showing a special effect detection device according to the fourth exemplary embodiment of the present invention. As shown in Fig. 15, the special effect detection device according to the fourth exemplary embodiment of the present invention includes an image boundary line extraction section 11 and a special effect detection section 24. The fourth exemplary embodiment is different from the first exemplary embodiment in that the special effect detection section 21 shown in Fig. 3 according to the first exemplary embodiment is replaced by the special effect detection section 24. The image boundary line detection section 11 is the same as the image boundary line detection section 11 in the first exemplary embodiment, and its explanation will be omitted.

The special effect detection section 24, as in the case of the special effect detection section 21 according to the first exemplary embodiment, detects a frame-set period including special effect by using image boundary line description information of respective frames outputted by the image boundary line extraction section 11, and outputs special effect frame-set period information identifying the frame-set period. However, the configuration is different from the special effect detection section 21 according to the first exemplary embodiment.

The special effect detection section 24 includes an image boundary line combination extraction section 231 and a continuously moving image boundary line combination frame-set period detection section241. The image boundary line combination extraction section 231 is the same as the image boundary line combination extraction section 231 in the third exemplary embodiment, and its explanation will be omitted.

The continuously moving image boundary line combination frame-set period detection section 241 detects a frame-set period in which a combination of image boundary lines indicated by the image boundary line combination information of respective frames outputted by the image boundary line combination extraction section 231 continuously moves, as a frame-set period including special effect, and outputs special effect frame-set period information as information identifying the frame-set period. Here, a frame-set period in which a combination of image boundary lines continuously moves, means a frame-set period in which each image boundary line of the combination of image boundary lines continuously moves. However, it is not necessarily needed that all the image boundary lines of the combination of image boundary lines continuously move. Even when only a part of image boundary lines of the combination of image boundary lines continuously moves, the continuously moving image boundary line combination frame-set period detection section 241 may detect the frame-set period as a frame-set period in which a combination of image boundary lines continuously moves.

As one example of a method of detecting a frame-set period in which a combination of image boundary lines continuously moves, there is a method in which parameters describing each image boundary line of the combination of image boundary lines extracted from frame is expressed as a feature point in parameter space; a frame-set period in which each feature point continuously moves with time elapsed in the parameter space is detected; and the frame-set period is detected as a frame-set period in which a combination of image boundary lines continuously moves.

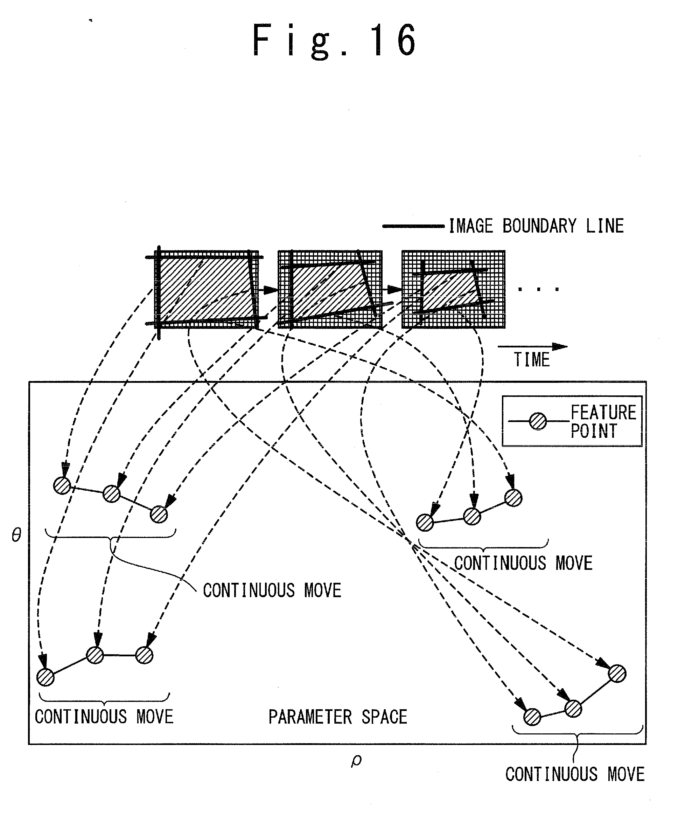

Fig. 16 is an explanatory diagram exemplifying how a feature point indicating each image boundary line of a combination of image boundary lines continuously moves with time elapsed in the parameter space during a frame-set period including special effect. Even when only feature points indicating a part of image boundary lines of the combination of image boundary lines continuously move with time elapsed, the frame-set period may be detected as a frame-set period in which a combination of image boundary lines continuously moves. A method of detecting a frame-set period in which a feature point indicating each image boundary line continuously moves in the parameter space is the same as the method described for the continuously moving image boundary line frame-set period detection section 221 in the second exemplary embodiment, for example.

The continuously moving image boundary line combination frame-set period detection section 241 may detect a frame-set period in which a combination of image boundary lines continuously moves from an end to another end of frame, as a frame-set period including special effect. That is to say, the continuously moving image boundary line combination frame-set period detection section 241 may detect a frame-set period in which each image boundary line of a combination of image boundary lines continuously moves from an end to another end of frame, as a frame-set period including special effect. As a method of detecting a frame-set period in which each image boundary line moves from an end to another end of frame, the method described in the second exemplary embodiment can be used. However, it does not necessarily need for every image boundary line of a combination of image boundary lines to continuously move from an end to another end of frame. Even when only a part of image boundary lines of a combination of image boundary lines continuously moves from an end to another end of frame, the continuously moving image boundary line combination frame-set period detection section 241 may detect the frame-set period as a frame-set period in which a combination of image boundary lines continuously moves from an end to another end of frame.

The continuously moving image boundary line combination frame-set period detection section 241 may further analyze a temporal change in area of a pattern formed by a combination of image boundary lines through respective frames, in the detected frame-set period in which a combination of image boundary lines continuously moves. The continuously moving image boundary line combination frame-set period detection section 241 may detect the above-mentioned frame-set period as a frame-set period including special effect when the temporal change in area satisfiescertaincriteria. For example, the continuously moving image boundary line combination frame-set period detection section 241 may detect the above-mentioned frame-set period as a frame-set period including special effect when the area of the pattern formed by combination of image boundary lines monotonically increase or decrease with time elapsed through respective frames.

As described in the third exemplary embodiment, as shown in (A) to (H) of Fig. 2 for example, this is because an area of an image box which is formed by a combination of image boundary lines in DVE among special effects and indicates a displaying region for video superimposed on the other of tow videos before and after transition, usually monotonically increases (e.g. (A), (D), (F), and (H) of Fig. 2) or monotonically decreases (e.g. (B), (C), (E), and (G) of Fig. 2). In case that a frame-set period in which a combination of image boundary lines continuously moves is detected as a frame-set period including special effect when an area of pattern formed by combination of image boundary lines monotonically increase or decrease with time elapsed through respective frames as described above, there is the effect of detecting DVE among special effects with high precision.

As described for the continuously moving image boundary line frame-set period detection section 221 according to the second exemplary embodiment, since a special effect is gradual change in which videos before and after transition are switched with their spatial occupancy ratio gradually changing, an image region having a decreasing area with time and an image region having an increasing area with time of the two image regions (inside and outside image regions of a combination of image boundary lines) separated by an image boundary line belong to video before transition and video after transition respectively. For this reason, the image region with a decreasing area with time is not similar to a frame of the video after transition and is partly similar to a frame of the video before transition. On the other hand, the image region having an increasing area with time is not similar to the frame of the video before transition and is partly similar to the frame of the video after transition.

The continuously moving image boundary line combination frame-set period detection section 241, when a frame-set period in which a combination of image boundary line continuously moves further satisfies the properties, may detect the frame-set period as a frame-set period including special effect. That is, the continuously moving image boundary line combination frame-set period detection section 241 may detect a detected frame-set period in which a combination of image boundary lines continuously moves as a frame-set period including special effect when the detected frame-set period further satisfies in each frame at least one property or a combination of a plurality of properties:

(a) an image region having a decreasing area with time of two image regions separated by a combination of image boundary lines of the frame is not similar to a frame after the frame-set period;
(b) an image region having a decreasing area with time of two image regions separated by a combination of image boundary lines of the frame is similar to a frame before the frame-set period;
(c) an image region having an increasing area with time of two image regions separated by a combination of image boundary lines of the frame is not similar to a frame before the frame-set period; and
(d) an image region having an increasing area with time of two image regions separated by a combination of image boundary lines of the frame is similar to a frame after the frame-set period. Here, a frame before/after the frame-set period may be a frame immediately before/after the frame-set period and also may be a frame before/after the frame-set period by a given number. Additionally, a plurality of frames before/after the frame-set period, for example, N frames before/after the frame-set period (N is the number of frames), may be used in place of a frame before/after the frame-set period.

Detailed descriptions about a process for distinguishing between an image region having a decreasing area with time and an image region having an increasing area with time, a process for judging similarity between an image region and a frame, and the like are the same as the descriptions for the continuously moving image boundary line frame-set period detection section 221 according to the second exemplary embodiment.

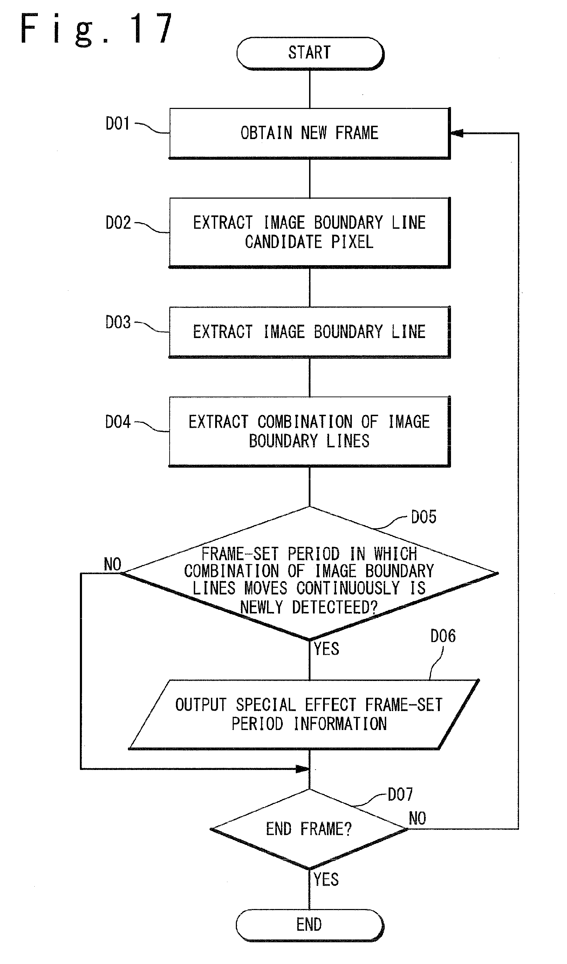

Next, with reference to a flow chart in Fig. 17, operation according to the fourth exemplary embodiment will be described. First, a new frame is obtained from input video and supplied to the image boundary line candidate pixel detection section 111 (step D01) . Here, the new frame is a start frame when the step D01 is performed for the first time.

Next, the image boundary line candidate pixel detection section 111 detects image boundary line candidate pixels from the frame and outputs image boundary line candidate pixel information identifying the detected image boundary line candidate pixels (step D02). Next, the line extraction section 112 extracts a line specified by image boundary line candidate pixels indicated by image boundary line candidate pixel information as an image boundary line, and outputs image boundary line description information describing the extracted image boundary line (step D03) .

Next, an image boundary line combination extraction section 231 extracts a combination of a plurality of image boundary lines indicated by the image boundary line description information and outputs image boundary line combination information describing the extracted combination of image boundary lines (step D04).

Next, the continuously moving image boundary line combination frame-set period detection section 241 newly detects a frame-set period in which a combination of image boundary lines indicated by image boundary line combination information continuously moves by using image boundary line description information outputted up to the present frame (step D05) . In order to prevent overlapping among detected frame-setperiods, for example, only when a f rame-set period in which a combination of image boundary lines continuously moves ends at the present frame, the continuously moving image boundary line combination frame-set period detection section 241 detects the frame-set period. Step D06 follows when a frame-set period in which a combination of image boundary lines continuously moves is newly detected. Step D07 follows otherwise.

When the frame-set period in which a combination of image boundary lines continuously moves is newly detected, the continuously moving image boundary line combination frame-set period detection section 241 takes the frame-set period as a frame-set period including special effect and outputs special effect frame-set period information identifying the frame-set period (step D06). Finally, the present frame is judged whether or not to be an end frame (step D07) and the processing is ended in the case of the end frame. The step D01 follows when the present frame is not the end frame, and the next frame of the video is obtained as a new frame to continue the processing. In this way, the processing of the steps D01 to D07 is performed until reaching the end frame.

In the fourth exemplary embodiment, a frame-set period in which a combination of image boundary lines continuously moves is detected as a frame-set period including special effect. For this reason, the fourth exemplary embodiment has an effect that DVE among special effects can be detected with higher precision compared with the first exemplary embodiment in which a frame-set period including successive frames having combination of image boundary lines is detected as a frame-set period including special effect, in addition to the effect according to the third exemplary embodiment.

(Fifth exemplary embodiment)

Next, a fifth exemplary embodiment of the present invention will be described with reference to the drawings.

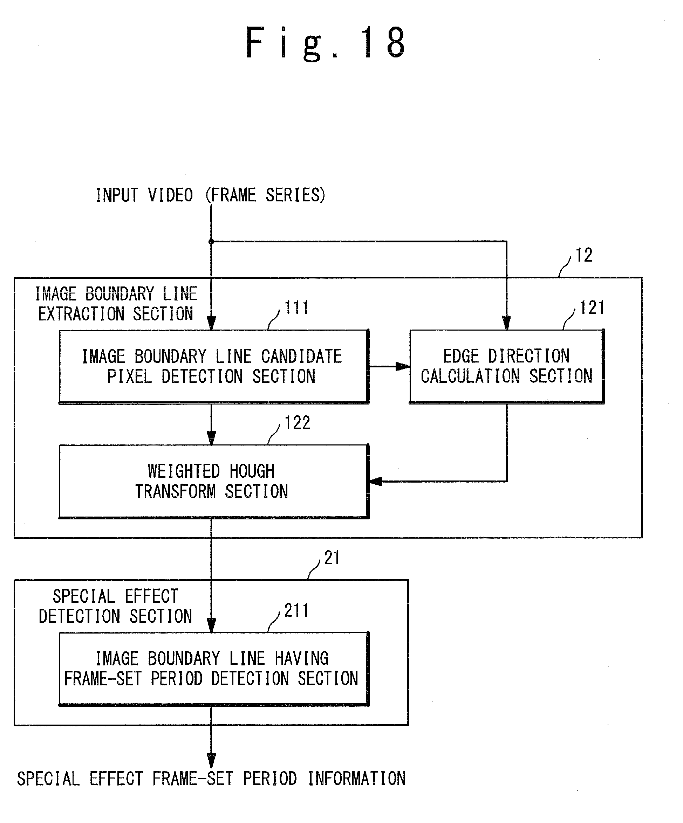

Fig. 18 is a block diagram showing a special effect detection device according to the fifth exemplary embodiment of the present invention. As shown in Fig. 18, the special effect detection device according to the fifth exemplary embodiment of the present invention includes an image boundary line extraction section 12 and a special effect detection section 21. The fifth exemplary embodiment is different from the first exemplary embodiment in that the image boundary line extraction section 11 shown in Fig. 3 according to the first exemplary embodiment is replaced by the image boundary line extraction section 12. Here, a configuration is exemplified in which the image boundary line extraction section 11 according to the first exemplary embodiment is replaced, however, a configuration is possible in which the image boundary line extraction section 11 according to any of second, third and fourth exemplary embodiments is replaced.

The image boundary line extraction section 12, as in the case of the image boundary line extraction section 11 according to the first exemplary embodiment, extracts an image boundary line as a boundary line between two images present in a frame from each frame of input video and outputs image boundary line description information as information describing the extracted image boundary line. However, the configuration is different from the image boundary line extraction section 11 according to the first exemplary embodiment.

The image boundary line extraction section 12 includes an image boundary line candidate pixel detection section 111, an edge direction calculation section 121, and a weighted Hough transform section 122. The image boundary line candidate pixel detection section 111 is the same as the image boundary line candidate pixel detection section 111 according to the first exemplary embodiment, and its explanation will be omitted.

The edge direction calculation section 121 inputs the image boundary line candidate pixel information of each frame outputted by the image boundary line candidate pixel detection section 111, and calculates an edge direction of each image boundary line candidate pixel indicated by the image boundary line candidate pixel information. The edge direction calculation section 121 outputs the calculated edge direction of each image boundary line candidate pixel for each frame. The edge direction means a gray-scale gradient direction of image and an arbitrary method of calculating the edge direction can be used. One example of a calculation method of an edge direction is disclosed in "Handbook of Image Analysis, New Edition" p. 1232, for example.

The weighted Hough transform section 122 inputs the image boundary line candidate pixel information of each frame outputted by the image boundary line candidate pixel detection section 111 and the edge direction of each image boundary line candidate pixel of each frame outputted by the edge direction calculation section 121. The weighted Hough transform section 122, for each frame, extracts a straight line by conducting voting in a straight line extraction method using the Hough transform with image boundary line candidate pixels as input such that a weight of voting is heavier when an angle between a direction of a straight line as object of voting and an edge direction of image boundary line candidate pixel is closer to perpendicular. The weighted Hough transform section 122 takes the extracted straight line as an image boundary line. The weighted Hough transform section 122 outputs image boundary line description information describing the extracted image boundary line for each frame.

In the Hough transform with image boundary line candidate pixels as input, which was described in the description about the line extraction section 112 according to the first exemplary embodiment, weights of voting for respective image boundary line candidate pixels are uniform. The weighted Hough transform section 122 is different from the first exemplary embodiment in that a weight of voting is heavier when an angle between a direction of a straight line as object of voting and an edge direction of image boundary line candidate pixel is closer to perpendicular. As one example of a calculation method for weight of voting, there is a method in which $\theta$ is set as weight of voting when an angle between a direction of a straight line as object of voting and an edge direction of an image boundary line candidate pixel is $\theta$ (where, $\theta$ is equal to or more than 0 and is equal to or less than $\pi/2$). It is also possible to calculate weight W of voting as in a formula (4), where $\alpha$ is a constant.

[Formula 4]

$$W = \exp\left\{ -\left( \frac{\pi/2 - \theta}{\alpha} \right)^2 \right\} \quad \cdots (4)$$

The special effect detection section 21 is the same as the special effect detection section 21 according to the first exemplary embodiment, and its explanation will be omitted.

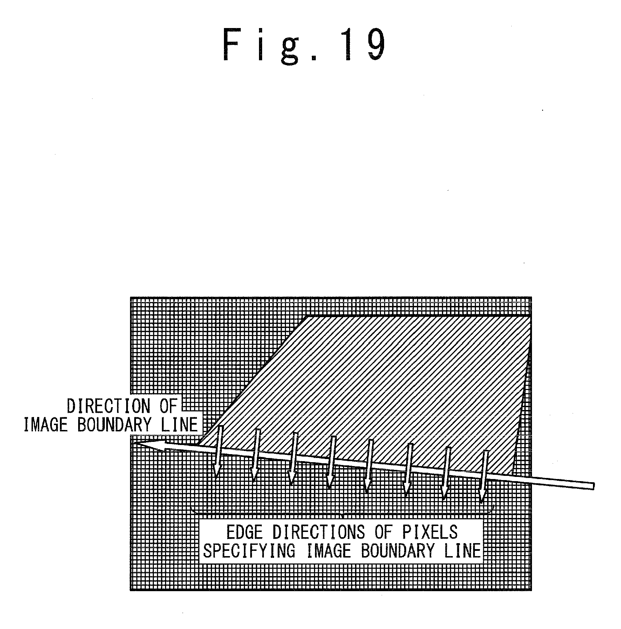

As shown in the explanatory diagram of Fig. 19, edge directions of pixels specifying an image boundary line have a property to be vertical to the direction of the image boundary line under ideal conditions. In the fifth exemplary embodiment, this property is used. In the fifth exemplary embodiment, an image boundary line is extracted by the Hough transform in which a weight of voting is heavier when an angle between a direction of a straight line as object of voting and an edge direction of image boundary line candidate pixel is closer to perpendicular. Therefore, the fifth exemplary embodiment enables an extraction of an image boundary line with higher precision compared with the first exemplary embodiment. As a result, the fifth exemplary embodiment has effect that a special effect can be detected with higher precision.

(Sixth exemplary embodiment)

Next, a sixth exemplary embodiment of the present invention will be described with reference to the drawing.

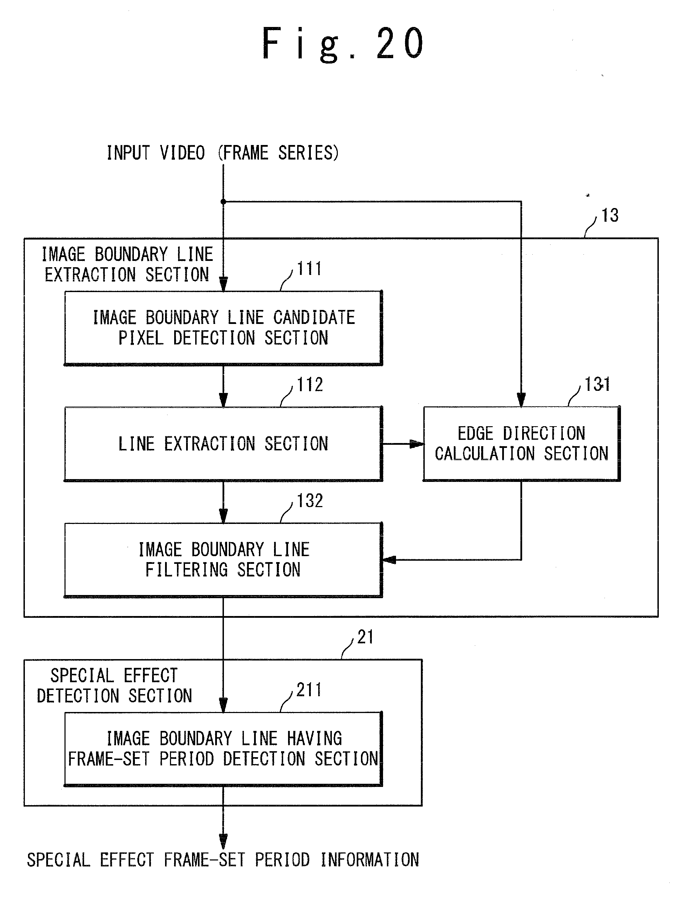

Fig. 20 is a block diagram showing a special effect detection device according to the sixth exemplary embodiment of the present invention. As shown in Fig. 20, the special effect detection device according to the sixth exemplary embodiment of the present invention includes an image boundary line extraction section 13 and a special effect detection section 21. The sixth exemplary embodiment is different from the first exemplary embodiment in that the image boundary line extraction section 11 shown in Fig. 3 according to the first exemplary embodiment is replaced by the image boundary line extraction section 13. Here, a configuration is exemplified in which the image boundary line extraction section 11 according to the first exemplary embodiment is replaced, however, a configuration is possible in which the image boundary line extraction section 11 according to any of second, third and fourth exemplary embodiments is replaced.

The image boundary line extraction section 13, as in the case of the image boundary line extraction section 11 according to the first exemplary embodiment, extracts an image boundary line as a boundary line between two images present in a frame from each frame of input video and outputs image boundary line description information as information describing the extracted image boundary line. However, the image boundary line extraction section 13 is different in configuration from the image boundary line extraction section 11 according to the first exemplary embodiment.

The image boundary line extraction section 13 includes an image boundary line candidate pixel detection section 111, a line extraction section 112, an edge direction calculation section 131, and an image boundary line filtering section 132. The image boundary line candidate pixel detection section 111 is the same as the image boundary line candidate pixel detection section 111 according to the first exemplary embodiment, and its explanation will be omitted. The line extraction section 112 is the same as the line extraction section 112 according to the first exemplary embodiment, and its explanation will be omitted.

The edge direction calculation section 131 inputs the image boundary line description information for each frame, outputted by the line extraction section 112, and calculates edge directions of respective image boundary line candidate pixels forming an image boundary line indicated by the image boundary line description information. The edge direction calculation section 131 outputs the calculated edge directions of respective image boundary line candidate pixels forming each image boundary line for each frame. Here, it is not necessary to calculate edge directions of all the image boundary line candidate pixels forming an image boundary line. The edge direction calculation section 131 may calculate edge directions only for arbitrarily-sampled image boundary line candidate pixels. An arbitrary method of calculating the edge direction can be used. One example of a calculation method of an edge direction is disclosed in "Handbook of Image Analysis, New Edition" p. 1232, for example.

The image boundary line filtering section 132 inputs image boundary line description information of respective frames outputted by the line extraction section 112 and edge directions of respective image boundary line candidate pixels forming each image boundary line of each frame outputted by the edge direction calculation section 131. The image boundary line filtering section 132 outputs image boundary line description information when it is statistically judged that angles between the direction of image boundary line indicated by the image boundary line description information and edge directions of respective image boundary line candidate pixels forming the image boundary line are close to perpendicular. Otherwise, the image boundary line filtering section 132 does not output image boundary line description information.

In one example of specific implementation methods, angles between a direction of an image boundary line and edge directions of respective image boundary line candidate pixels forming the image boundary line are calculated. In this example, it is statistically judged that angles between a direction of an image boundary line and edge directions of respective image boundary line candidate pixels forming the image boundary line are close to perpendicular when a ratio of image boundary line candidate pixels with magnitudes of the differences between respective calculated angles and an angle ($\pi/2$) indicating perpendicular within a threshold value, exceeds a threshold value. As another example of implementation methods, angles between a direction of an image boundary line and edge directions of respective image boundary line candidate pixels forming the image boundary line are calculated. In the other example, it is statistically judged that angles between a direction of an image boundary line and edge directions of respective image boundary line candidate pixels forming the image boundary line are close to perpendicular when an average of magnitudes or an average of squares of magnitudes of the differences between respective calculated angles and an angle ($\pi/2$) indicating perpendicular does not exceed a threshold value.

The special effect detection section 21 is the same as the special effect detection section 21 according to the first exemplary embodiment, and its explanation will be omitted.

In the sixth exemplary embodiment, as in the case of the fifth exemplary embodiment, it is used that edge directions of pixels forming an image boundary line have a property to be vertical to the direction of the image boundary line under ideal conditions. In the sixth exemplary embodiment, an image boundary line extracted by the line extraction section 112 is eliminated when it is statistically judged that angles between the direction of the image boundary line and edge directions of respective image boundary line candidate pixels forming the image boundary line are not close to perpendicular. Therefore, it is possible to reduce detection of a line other than an image boundary line as an image boundary line by mistake. As a result, there is effect that a special effect can be detected with higher precision. Furthermore, in the sixth exemplary embodiment, edge directions are calculated only for image boundary line candidate pixels forming an image boundary line extracted by the line extraction section 112. Therefore, the sixth exemplary embodiment has also effect that a calculation amount can be reduced compared with the fifth exemplary embodiment.

(Seventh exemplary embodiment)

Next, a seventh exemplary embodiment of the present invention will be described with reference to the drawings.

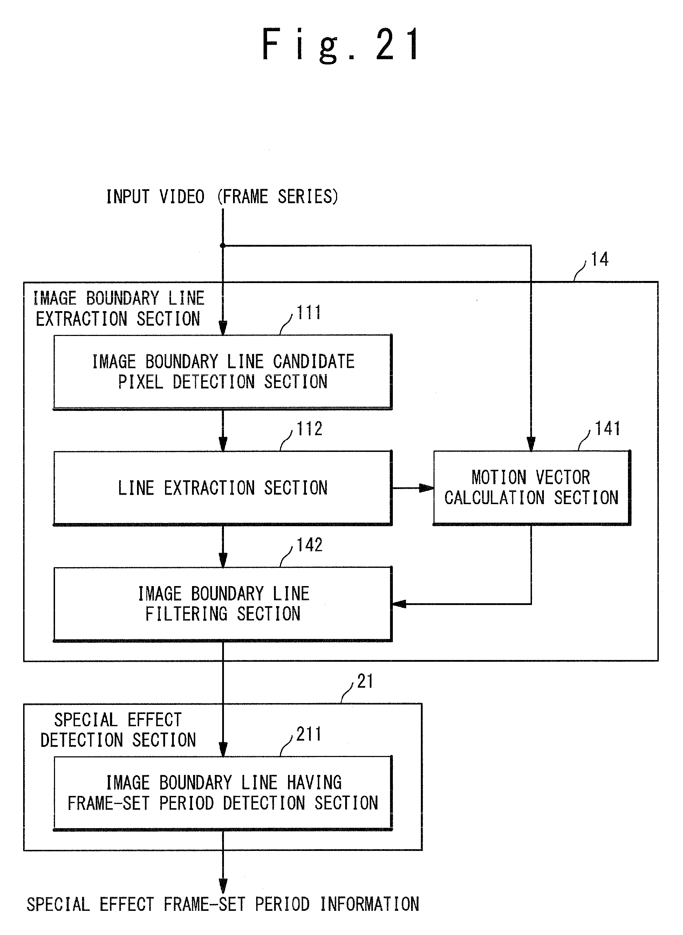

Fig. 21 is a block diagram showing a special effect detection device according to the seventh exemplary embodiment of the present invention. As shown in Fig. 21, the special effect detection device according to the seventh exemplary embodiment of the present invention includes an image boundary line extraction section 14 and a special effect detection section 21. The seventh exemplary embodiment is different from the first exemplary embodiment in that the image boundary line extraction section 11 shown in Fig. 3 according to the first exemplary embodiment is replaced by the image boundary line extraction section 14. Here, a configuration is exemplified in which the image boundary line extraction section 11 according to the first exemplary embodiment is repl aced, however, a configuration is possible in which the image boundary line extraction section 11 according to any of second, third and fourth exemplary embodiments is replaced.

The image boundary line extraction section 14, as in the case of the image boundary line extraction section 11 according to the first exemplary embodiment, extracts an image boundary line as a boundary line between two images present in a frame from each frame of input video and outputs image boundary line description information as information describing the extracted image boundary line. However, the image boundary line extraction section 14 is different in configuration from the image boundary line extraction section 11 according to the first exemplary embodiment.

The image boundary line extraction section 14 includes an image boundary line candidate pixel detection section 111, a line extraction section 112, a motion vector calculation section 141, and an image boundary line filtering section 142. The image boundary line candidate pixel detection section 111 is the same as the image boundary line candidate pixel detection section 111 according to the first exemplary embodiment, and its explanation will be omitted. The line extraction section 112 is the same as the line extraction section 112 according to the first exemplary embodiment, and its explanation will be omitted.

The motion vector calculation section 141 inputs image boundary line description information of respective frames outputted by the line extraction section 112 and calculates motion vectors of a plurality of points on an image boundary line indicated by the image boundary line description information. The motion vector calculation section 141 outputs the calculated motion vectors of the plurality of points on each image boundary line for each frame. An arbitrary method of calculating the motion vector can be used. One example of a calculation method of a motion vector is disclosed in "Handbook of Image Analysis, New Edition" pp. 1495 - 1498, for example.

The image boundary line filtering section 142 inputs image boundary line description information for each frame outputted by the line extraction section 112 and motion vectors of a plurality of points on each image boundary line of each frame outputted by the motion vector calculation section 141. The image boundary line filtering section 142 outputs image boundary line description information when directions or magnitudes of the motion vectors of a plurality of points on an image boundary line indicated by the image boundary line description information are notuniform. Otherwise, the image boundary line filtering section 142 does not output image boundary line description information.

As one example of a method of judging whether directions or magnitudes of motion vectors of a plurality of points on an image boundary line are not uniform, there is a method in which a variation of motion vectors is calculated as in the case of the method described for the image boundary line candidate pixel detection section 111 according to the first exemplary embodiment. The motion vectors of a plurality of points (N points) on an image boundary line are expressed by a formula (5) and an average vector of these motion vectors is expressed by a formula (6). A variation V among the motion vectors can be calculated as an average value of inter-vector distances between the motion vectors expressed by the formula (5) and the average vector expressed by the formula (6), as indicated by a formula (7).

[Formula 5]

$$\left(m_1, m_2, \cdots, m_N\right) \quad \cdots(5)$$

[Formula 6]

$$\overline{m} \quad \cdots(6)$$

[Formula 7]

$$V = \frac{1}{N}\sum_{i=1}^{N}\left|\overline{m} - m_i\right|^2 \quad \cdots(7)$$

When the variation of motion vectors of a plurality of points on an image boundary line thus calculated exceeds a certain threshold value, it can be judged that the directions or magnitudes of the motion vectors of the points on the image boundary line are not uniform.

The special effect detection section 21 is the same as the special effect detection section 21 according to the first exemplary embodiment, and its explanation will be omitted.

Since an image boundary line is a moving boundary between two images, the image boundary line has a property that directions or magnitudes of motion vectors of a plurality of points on the image boundary line are not uniform. In the seventh exemplary embodiment, this property is used. In the seventh exemplary embodiment, an image boundary line extracted by the line extraction section 112 is eliminated when directions and magnitudes of motion vectors of a plurality of points on the image boundary line are uniform. Therefore, it is possible to reduce detection of a line other than an image boundary line as an image boundary line by mistake. As a result, there is effect that a special effect can be detected with higher precision.

(Eighth exemplary embodiment)

Next, an eighth exemplary embodiment of the present invention will be described with reference to the drawings.

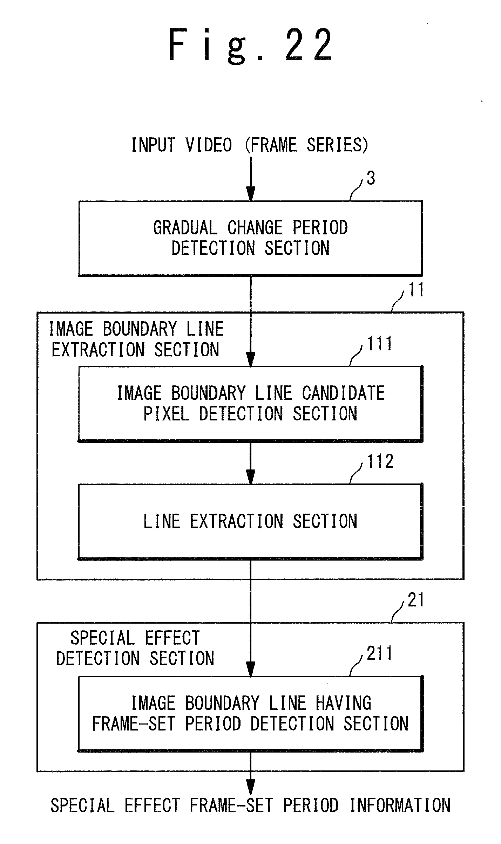

Fig. 22 is a block diagram showing a special effect detection device according to the eighth exemplary embodiment of the present invention. As shown in Fig. 22, the special effect detection device according to the eighth exemplary embodiment of the present invention includes a gradual change period detection section 3, an image boundary line extraction section 11, and a special effect detection section 21. The eighth exemplary embodiment is different from the first exemplary embodiment in that the gradual change period detection section 3 is provided in addition to the configuration shown in Fig. 3 according to the first exemplary embodiment. Here, the combination of the configuration according to the first exemplary embodiment and the gradual change period detection section 3 is exemplified; however a combination of a configuration according to another exemplary embodiment and the gradual change period detection section 3 is also possible.

The gradual change period detection section 3 extracts feature amounts from respective frames of input video, compares the feature amounts extracted from respective frames, and thus detects a gradual change period as a period in which video gradually changes. The gradual change period detection section 3 supplies a frame series of the detected gradual change period, as input of the image boundary line extraction section 11.

The feature amount extracted from each frame may be arbitrary. Methods of detecting a gradual change period based on comparison of feature amounts extracted from respective frames are disclosed in Japanese Laid Open Patent Application (JP-A-Heisei 8-237549), Japanese Laid Open Patent Application (JP-P2005-237002A), and "Automatic Partitioning of Full-Motion Video", for example. The methods disclosed in these documents may be used, however another method of detecting a gradual change period based on comparison of feature amounts may also be used.

In the eighth exemplary embodiment, a special effect is detected from a gradual change period of input video. Therefore, the eighth exemplary embodiment has effect that a video special effect can be detected more quickly compared with the other exemplary embodiments in which a special effect is detected directly from input video.

(Ninth exemplary embodiment)

Next, a ninth exemplary embodiment of the present invention will be described with reference to the drawings.

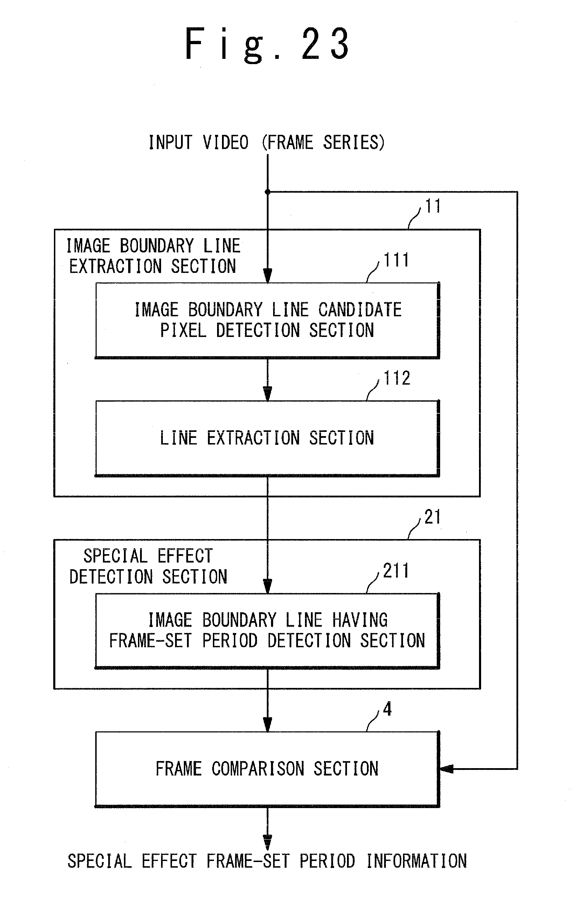

Fig. 23 is a block diagram showing a special effect detection device according to the ninth exemplary embodiment of the present invention. As shown in Fig. 23, the special effect detection device according to the ninth exemplary embodiment of the present invention includes an image boundary line extraction section 11, a special effect detection section 21, and a frame comparison section 4. The ninth exemplary embodiment is different from the first exemplary embodiment in that the frame comparison section 4 is provided in addition to the configuration shown in Fig. 3 according to the first exemplary embodiment. Here, the combination of the configuration according to the first exemplary embodiment and the frame comparison section 4 is exemplified, however a combination of a configuration according to another exemplary embodiment and the frame comparison section 4 is also possible.

The frame comparison section 4 receives special effect frame-set period information outputted by the special effect detection section 21, obtains frames before and after a frame-set period indicated by the special effect frame-set period information from input video, and extracts feature amounts of the obtained frames. The frame comparison section 4 judges whether or not there is video transition between before and after the frame-set period by comparing the extracted feature amounts. The frame comparison section 4 outputs the special effect frame-set period information when judging that there is video transition. Otherwise, the frame comparison section 4 does not output the special effect frame-set period information.

Here, frames before and after a frame-set period to be obtained do not need to be frames immediately before and after the frame-set period. Those may be frames before and after the frame-set period by a predetermined number. Alternatively, each of frames before and after the frame-set period may be a plurality of frames, e.g. N frames (N is the number of frames) before or after the frame-set period, for example. In this case, the frame comparison section 4 may judge whether or not there is video transition between before and after a frame-set period by comparing feature amounts of a plurality of frames before and after the frame-set period. A feature amount extracted from a frame may be arbitrary.

As one example of a method of judging whether or not there is video transition between before and after a frame-set period by comparing feature amounts of frames before and after the frame-set period, there is a method in which a distance (or similarity) between feature amounts is calculated and presence of video transition is judged when the calculated distance exceeds a certain threshold value (or the similarity exceeds a threshold value). A distance and a similarity between feature amounts may be calculated using arbitrary method. Here, it is preferable that the threshold value is set based on the investigation of the distance (or similarity) between feature amounts of frames before and after video transition by using video provided for learning, for example.

In the ninth exemplary embodiment, special effect frame-set period information outputted by the special effect detection section 21 is eliminated when it is judged that there is no video transition between before and after a frame-set period indicated by the special effect frame-set period information. Therefore, the ninth exemplary embodiment has effect to reduce the detection of one other than special effect by mistake.

(Tenth exemplary embodiment)

Next, a tenth exemplary embodiment of the present invention will be described with reference to the drawings.

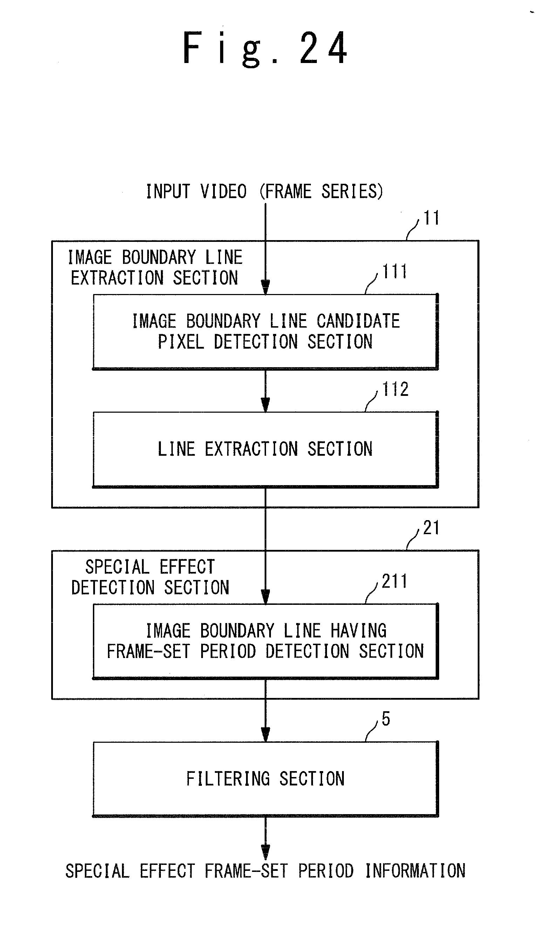

Fig. 24 is a block diagram showing a special effect detection device according to the tenth exemplary embodiment of the present invention. As shown in Fig. 24, the special effect detection device according to the tenth exemplary embodiment of the present invention includes an image boundary line extraction section 11, a special effect detection section 21, and a filtering section 5. The tenth exemplary embodiment is different from the first exemplary embodiment in that the filtering section 5 is provided in addition to the configuration shown in Fig. 3 according to the first exemplary embodiment. Here, the combination of the configuration according to the first exemplary embodiment and the filtering section 5 is exemplified, however a combination of a configuration according to another exemplary embodiment and the filtering section 5 is also possible.

The filtering section 5 receives special effect frame-set period information outputted by the special effect detection section 21 and outputs special effect frame-set period information after limiting it such that the number of frame-set periods including special effect to be detected in arbitrary time period is limited. For example, the filtering section 5 sets the length of the time period as L, limits frame-set periods indicated by the special effect frame-set period information outputted by the special effect detection section 21 such that the maximum number of the frame-set period included in the time period of length L in arbitrary position of video is limited to one, and outputs only special effect frame-set period information indicating the limited frame-set periods. Arbitrary method of limiting may be used. For example, it is possible to prioritize one with a long period length among frame-set periods indicated by special effect frame-set period information.

The tenth exemplary embodiment has effect that a large number of special effects are prevented to be detected in a short time period and continuous occurrence of false detection is prevented.

According to the above-mentioned exemplary embodiments, it is possible to detect starting points of a section, a topic and so forth which are important portions of video in terms of meaning. For this reason, the above-mentioned exemplary embodiments can be applied to automatic structuring of video.

**Claims**

1.  A video special effect detection device comprising:

    an image boundary line extraction section configured to extract from a frame of video an image boundary line as a boundary line between two images in said frame; and
    a special effect detection section configured to detect a special effect in said video based on said image boundary line.

2.  The video special effect detection device according to claim 1, wherein said image boundary line extraction section extracts from each frame of said video an image boundary line as a boundary line between two images in said each frame and outputs image boundary line description information as information describing said image boundary line, and
    said special effect detection section detects a frame-set period including said special effect by using said image boundary line description information of respective frames and outputs special effect frame-set period information as information identifying said frame-set period.

3.  The video special effect detection device according to claim 2, wherein said special effect is a video transition using a wipe or a digital video effect.

4.  The video special effect detection device according to claim 2 or claim 3, wherein said image boundary line includes a line in said frame, which moves in conjunction with said boundary line between said two images in said frame.

5.  The video special effect detection device according to any one of claims 2 to 4, wherein said image boundary line extraction section includes:

    an image boundary line candidate pixel detection section configured to detect image boundary line candidate pixels as candidates for pixels specifying said image boundary line from each frame of said video and output for each frame image boundary line candidate pixel information as information indentifying said image boundary line candidate pixels; and
    a line extraction section configured to extract for each frame as said image boundary line a line specified by said image boundary line candidate pixels indicated by said image boundary line candidate pixel information and output image boundary line description information as information describing said image boundary line for each frame.

6.  The video special effect detection device according to claim 5, wherein said image boundary line candidate pixel detection section detects, as said image boundary line candidate pixels, pixels which satisfy any one or a combination of a plurality of conditions:

pixels in edge;
pixels having large inter-frame pixel difference values; and
pixels belonging to a region in which motion vectors are varied.

7. The video special effect detection device according to claim 5 or claim 6, wherein said line extraction section extract said line specified by said image boundary line candidate pixels as said image boundary line by using Hough transform.

8. The video special effect detection device according to any one of claims 2 to 7, wherein said special effect detection section includes:

an image boundary line having frame-set period detection section configured to judge whether or not a frame has said image boundary line for said each frame by using said image boundary line description information of respective frames, detect a frame-set period including successive frames having said image boundary line as said frame-set period including said special effect, and output special effect frame-set period information as information identifying said frame-set period.

9. The video special effect detection device according to any one of claims 2 to 7, wherein said special effect detection section includes:

a continuously moving image boundary line frame-set period detection section configured to detect as said frame-set period including said special effect a frame-set period in which said image boundary line indicated by said image boundary line description information of respective frames moves continuously and output special effect frame-set period information as information identifying said frame-set period.

10. The video special effect detection device according to claim 9, wherein said continuously moving image boundary line frame-set period detection section expresses parameters describing an image boundary line of each frame as a feature point in a parameter space and detects as said frame-set period including said special effect a frame-set period in which said feature point expressing said image boundary line continuously moves with time in said parameter space.

11. The video special effect detection device according to claim 9 or claim 10, wherein said continuously moving image boundary line frame-set period detection section detects a frame-set period in which said image boundary line continuously moves from an end to another end of frame as said frame-set period including said special effect.

12. The video special effect detection device according to any one of claims 9 to 11, wherein said continuously moving image boundary line frame-set period detection section evaluates, for each frame of said frame-set period in which said image boundary line continuously moves, similarity between at least one image region of two image regions of a frame separated by said image boundary line and at least one frame of frames before and after said frame-set period and detects said frame-set period as said frame-set period including said special effect based on said similarity.

13. The video special effect detection device according to any one of claims 2 to 7, wherein said special effect detection section includes:

an image boundary line combination extraction section configured to extract a combination of a plurality of image boundary lines indicated by said image boundary line description information of each frame and output image boundary line combination information as information describing said combination of image boundary lines for each frame; and
an image boundary line combination having frame-set period detection section configured to judge whether or not a frame has said combination of image boundary lines by using said image boundary line combination information of respective frames, detect a frame-set period including successive frames having said combination of image boundary lines as said frame-set period including said special effect, and output special effect frame-set period information as information identifying said frame-set period.

14. The video special effect detection device according to claim 13, wherein said image boundary line combination having frame-set period detection section analyzes change with time in area of a pattern formed by said combination of image boundary lines and detects said frame-set period as said frame-set period including said special effect when said change with time in area satisfies a certain criteria.

15. The video special effect detection device according to claim 14, wherein said image boundary line combination having frame-set period detection section detects said frame-set period as said frame-set period including said special effect when said area monotonically increases or decreases with time.

16. The video special effect detection device according to any one of claims 2 to 7, wherein said special effect detection section includes:

an image boundary line combination extraction section configured to extract a combination of a plurality of image boundary lines indicated by said image boundary line description information of each frame and output image boundary line combination information as information describing said combination of image boundary lines for each frame; and
a continuously moving image boundary line combination frame-set period detection section configured to detect as said frame-set period including said special effect a frame-set period in which said combination of image boundary lines indicated by said image boundary line description information of respective frames moves continuously and output special effect frame-set period information as information identifying said frame-set period.

17. The video special effect detection device according to any one of claims 13 to 16, wherein said image boundary line combination extraction section extracts said combination of image boundary lines when said plurality of image boundary lines forms a quadrangle or a part of quadrangle.

18. The video special effect detection device according to claim 16 or claim 17, wherein said continuously moving image boundary line combination frame-set period detection section expresses parameters describing respective image boundary lines of said combination of image boundary lines of each frame as feature points in a parameter space and detects as said frame-set period including said special effect a frame-set period in which each of said feature points continuously moves with time in said parameter space.

19. The video special effect detection device according to any one of claims 16 to 18, wherein said continuously moving image boundary line combination frame-set period detection section detects a frame-set period in which said combination of image boundary lines continuously moves from an end to another end of frame as said frame-set period including said special effect.

20. The video special effect detection device according to any one of claims 16 to 19, wherein said continuously moving image boundary line combination frame-set period detection section analyzes change with time in area of a pattern formed by said combination of image boundary lines and detects said frame-set period as said frame-set period including said special effect when said change with time in area satisfies a certain criteria.

21. The video special effect detection device according to claim 20, wherein said continuously moving image boundary line combination frame-set period detection section detects said frame-set period as said frame-set period including said special effect when said area monotonically increases or decreases with time.

22. The video special effect detection device according to any one of claims 16 to 21, wherein said continuously moving image boundary line combination frame-set period detection section evaluates, for each frame of said frame-set period in which said combination of image boundary lines continuously moves, similarity between at least one image region of two image regions of a frame separated by said image boundary line and at least one frame of frames before and after said frame-set period and detects said frame-set period as said frame-set period including said special effect based on said similarity.

23. The video special effect detection device according to any one of claims 2 to 22, wherein said image boundary line extraction section includes:

an image boundary line candidate pixel detection section configured to detect image boundary line candidate pixels as candidates for pixels specifying said image boundary line from each frame of said video and output for each frame image boundary line candidate pixel information as information indentifying said image boundary line candidate pixels;

25

an edge direction calculation section configured to calculate an edge direction of each of said image boundary line candidate pixels indicated by said image boundary line candidate pixel information of each frame and output said calculated edge direction of said each image boundary line candidate pixel for each frame; and

a weighted Hough transform section configured to extracts, for each frame, a straight line by conducting voting in a straight line extraction method using Hough transform with said image boundary line candidate pixels indicated by said image boundary line candidate pixel information as input such that a weight of voting is heavier when an angle between a direction of a straight line as object of voting and said edge direction of image boundary line candidate pixel is closer to perpendicular, takes said extracted straight line as an image boundary line and output image boundary line description information as information describing said image boundary line.

24. The video special effect detection device according to any one of claims 5 to 23, wherein said image boundary line extraction section further includes:

an edge direction calculation section configured to calculate edge directions of image boundary line candidate pixels forming said image boundary line indicated by said image boundary line description information of each frame and output said calculated edge directions of said image boundary line candidate pixels forming said image boundary line for each frame; and

an image boundary line filtering section configured to output, for each frame, said image boundary line description information when it is statistically judged that angles between a direction of said image boundary line indicated by said image boundary line description information and said edge directions of said image boundary line candidate pixels forming said image boundary line are close to perpendicular.

25. The video special effect detection device according to any one of claims 5 to 24, wherein said image boundary line extraction section further includes:

a motion vector calculation section configured to calculate motion vectors of a plurality of points on said image boundary line indicated by said image boundary line description information of each frame and output said calculated motion vectors of said plurality of points on said image boundary line for each frame; and

an image boundary line filtering section configured to output, for each frame, said image boundary line description information when directions or magnitudes of said motion vectors of said plurality of points on said boundary line indicated by said image boundary line description information are not uniform.

26. The video special effect detection device according to any one of claims 2 to 25, further comprising:

a gradual change detection section configured to extract feature amounts from respective frames of video, compare among said feature amounts extracted from said respective frames to detect a gradual change period as period in which video gradually changes, and output frame series of said gradual change period, and wherein said video is video which is limited to said gradual change period by said gradual change detection section in advance.

27. The video special effect detection device according to any one of claims 2 to 26, further comprising:

a frame comparison section configured to obtain from said video frames before and after said frame-set period indicated by said special effect frame-set period information outputted by said special effect detection section, extract feature amounts of said obtained frames, compare between said extracted feature amounts to judge whether or not there is video transition between before and after said frame-set period, and output said special effect frame-set period information when it is judged that there is said video transition.

28. The video special effect detection device according to any one of claims 2 to 27, further comprising:

a filtering section configured to receive said special effect frame-set period information outputted by said special effect detection section and output said special effect frame-set period information after limiting said special effect frame-set period information such that number of frame-set periods including special effect and detected in arbitrary time period is limited.

29. A video replay device comprising:

the video special effect detection device according to any of claims 2 to 28; and

a video replay control device configured to control replay of video based on said special effect frame-set period information outputted by the video special effect detection device.

30. A video special effect detection method comprising:

extracting from each frame of video an image boundary line as a boundary line between two images in said each frame;
outputting image boundary line description information as information describing said image boundary line;
detecting a frame-set period including special effect by using said image boundary line description information of respective frames; and
outputting special effect frame-set period information as information identifying said frame-set period.

31. A video special effect detection program for causing a computer to execute a method comprising:

extracting from each frame of video an image boundary line as a boundary line between two images in said each frame;
outputting image boundary line description information as information describing said image boundary line;
detecting a frame-set period including special effect by using said image boundary line description information of respective frames; and
outputting special effect frame-set period information as information identifying said frame-set period.

Fig. 1

# Fig. 2

(A)

(B)

(C)

(D)

(E)

(F)

(G)

(H)

(I)

TIME

# Fig. 3

INPUT VIDEO (FRAME SERIES)

11

IMAGE BOUNDARY LINE
EXTRACTION SECTION

111

IMAGE BOUNDARY LINE CANDIDATE
PIXEL DETECTION SECTION

112

LINE EXTRACTION SECTION

21

SPECIAL EFFECT
DETECTION SECTION

211

IMAGE BOUNDARY LINE HAVING
FRAME-SET PERIOD DETECTION SECTION

SPECIAL EFFECT FRAME-SET PERIOD INFORMATION

# Fig. 4

(A)

(B)

(C)

(D)

(E)

(F)

——— IMAGE BOUNDARY LINE

# Fig. 5

# Fig. 6

···00000⏜1110111111010110⏜00000000000000000000001⏜11101111110111110000··· → TIME

FRAME-SET PERIOD INCLUDING
SUCCESSIVE FRAMES HAVING
IMAGE BOUNDARY LINE

FRAME-SET PERIOD
INCLUDING SUCCESSIVE FRAMES HAVING
IMAGE BOUNDARY LINE

# Fig. 7

```
                    ┌──────────┐
                    │  START   │
                    └──────────┘
                         │
                         ▼
A01 ──────┌──────────────────────────────┐◄───────┐
          │       OBTAIN NEW FRAME        │        │
          └──────────────────────────────┘        │
                         │                         │
                         ▼                         │
A02 ──────┌──────────────────────────────┐        │
          │  EXTRACT IMAGE BOUNDARY LINE  │        │
          │       CANDIDATE PIXEL         │        │
          └──────────────────────────────┘        │
                         │                         │
                         ▼                         │
A03 ──────┌──────────────────────────────┐        │
          │   EXTRACT IMAGE BOUNDARY LINE │        │
          └──────────────────────────────┘        │
                         │                         │
                         ▼        A04              │
                    ╱────────────╲                 │
         NO    ╱ FRAME-SET PERIOD INCLUDING ╲      │
        ◄─────  SUCCESSIVE FRAMES HAVING IMAGE     │
         │      ╲ BOUNDARY LINE IS NEWLY  ╱        │
         │        ╲   DETECTEED?        ╱          │
         │           ╲──────────────╱              │
         │                 │YES      A05           │
         │                 ▼      ╱                │
         │      ┌──────────────────────────┐       │
         │      │ OUTPUT SPECIAL EFFECT     │       │
         │      │ FRAME-SET PERIOD          │       │
         │      │ INFORMATION              ╱│       │
         │      └──────────────────────────┘       │
         │                 │                       │
         └────────────────►│                       │
                           ▼      A06              │
                      ╱──────────╲        NO       │
                     ╱ END FRAME? ╲───────────────►┘
                      ╲──────────╱
                           │YES
                           ▼
                     ┌──────────┐
                     │   END    │
                     └──────────┘
```

# Fig. 8

INPUT VIDEO (FRAME SERIES)

/11

IMAGE BOUNDARY LINE
EXTRACTION SECTION /111

IMAGE BOUNDARY LINE CANDIDATE PIXEL
DETECTION SECTION

/112

LINE EXTRACTION SECTION

/22

SPECIAL EFFECT
DETECTION SECTION /221

CONTINUOUSLY MOVING IMAGE BOUNDARY LINE
FRAME-SET PERIOD DETECTION SECTION

SPECIAL EFFECT FRAME-SET PERIOD INFORMATION

# Fig. 9

IMAGE BORDERLINE

(A)

(B)

(C)

TIME

EP 2 028 619 A1

Fig.10

IMAGE BOUNDARY LINE

TIME

PARAMETER SPACE

$\theta$

CONTINUOUS MOVE

FEATURE POINT

$\rho$

EP 2 028 619 A1

# Fig. 11

```
                    ┌─────────────┐
                    │    START    │
                    └──────┬──────┘
                           │
  B01 ──┐         ┌────────┴────────┐
        │         │  OBTAIN NEW FRAME  │◄────────┐
        └─────────└─────────┬─────────┘         │
                           │                    │
  B02 ──┐         ┌────────┴─────────────────┐  │
        │         │ EXTRACT IMAGE BOUNDARY LINE │  │
        └─────────│     CANDIDATE PIXEL        │  │
                  └─────────┬─────────────────┘  │
                           │                    │
  B03 ──┐         ┌────────┴──────────────────┐ │
        │         │  EXTRACT IMAGE BOUNDARY LINE │ │
        └─────────└─────────┬──────────────────┘ │
                           │                    │
        B04 ──┐      ╱─────┴─────╲               │
              │    ╱               ╲             │
       NO   ╱  FRAME-SET PERIOD IN WHICH IMAGE ╲ │
     ┌─────◄ BOUNDARY LINE MOVES CONTINUOUSLY IS ►│
     │      ╲    NEWLY DETECTEED?               ╱ │
     │        ╲                   ╱             │
     │          ╲────────┬───────╱              │
     │                   │ YES                  │
     │  B05 ──┐          │                      │
     │        │   ┌──────┴──────────────────┐   │
     │        └───│ OUTPUT SPECIAL EFFECT FRAME-SET │ │
     │            │    PERIOD INFORMATION       │   │
     │            └──────┬──────────────────┘   │
     │                   │                      │
     └───────────────────►                      │
                        │                       │
        B06 ──┐    ╱────┴────╲          NO       │
              │  ╱             ╲──────────────────┘
              └─◄   END FRAME?  ►
                 ╲             ╱
                   ╲────┬────╱
                        │ YES
                 ┌──────┴──────┐
                 │     END     │
                 └─────────────┘
```

# Fig. 12

INPUT VIDEO (FRAME SERIES)

/11

IMAGE BOUNDARY LINE
EXTRACTION SECTION
/111

IMAGE BOUNDARY LINE CANDIDATE
PIXEL DETECTION SECTION

/112

LINE EXTRACTION SECTION

/23

SPECIAL EFFECT
DETECTION SECTION
/231

IMAGE BOUNDARY LINE COMBINATION
EXTRACTION SECTION

/232

IMAGE BOUNDARY LINE COMBINATION
HAVING FRAME-SET PERIOD DETECTION SECTION

SPECIAL EFFECT FRAME-SET PERIOD INFORMATION

# Fig. 13

(A)

9

9

(B)

9

9

(C)

9

9

(D)

9

9

(E)

9

9

(F)

9

━━━ IMAGE BOUNDARY LINE

# Fig.14

```
          START
            │
            ▼
┌─────────────────────────────┐
│ C01   OBTAIN NEW FRAME       │◄────────────┐
└─────────────────────────────┘             │
            │                                │
            ▼                                │
┌─────────────────────────────┐             │
│ C02   EXTRACT IMAGE BOUNDARY │             │
│       LINE CANDIDATE PIXEL   │             │
└─────────────────────────────┘             │
            │                                │
            ▼                                │
┌─────────────────────────────┐             │
│ C03   EXTRACT IMAGE          │             │
│       BOUNDARY LINE          │             │
└─────────────────────────────┘             │
            │                                │
            ▼                                │
┌─────────────────────────────┐             │
│ C04   EXTRACT COMBINATION OF │             │
│       IMAGE BOUNDARY LINES   │             │
└─────────────────────────────┘             │
            │                                │
            ▼                                │
          C05                                │
      ◇─────────────────────────◇           │
  NO  FRAME-SET PERIOD INCLUDING            │
 ┌────SUCCESSIVE FRAMES HAVING COMBINATION  │
 │    OF IMAGE BOUNDARY LINES IS            │
 │        NEWLY DETECTEED?                  │
 │      ◇─────────────────────◇            │
 │            │ YES                         │
 │    C06     ▼                             │
 │   ╱─────────────────────────╲           │
 │  ╱ OUTPUT SPECIAL EFFECT     ╲          │
 │ ╱  FRAME-SET PERIOD INFORMATION╲        │
 │╱─────────────────────────────╲          │
 │            │                             │
 └───────────►│                             │
             C07                            │
          ◇───────────◇      NO            │
          │ END FRAME? │──────────────────┘
          ◇───────────◇
             │ YES
             ▼
           END
```

# Fig. 15

INPUT VIDEO (FRAME SERIES)

/11

IMAGE BOUNDARY LINE
EXTRACTION SECTION

/111

IMAGE BOUNDARY LINE CANDIDATE PIXEL
DETECTION SECTION

/112

LINE EXTRACTION SECTION

/24

SPECIAL EFFECT
DETECTION SECTION

/231

IMAGE BOUNDARY LINE COMBINATION
EXTRACTION SECTION

/241

CONTINUOUSLY MOVING IMAGE BOUNDARY LINE
COMBINATION FRAME-SET PERIOD DETECTION SECTION

SPECIAL EFFECT FRAME-SET PERIOD INFORMATION

# Fig. 16

# Fig. 17

START

D01 — OBTAIN NEW FRAME

D02 — EXTRACT IMAGE BOUNDARY LINE CANDIDATE PIXEL

D03 — EXTRACT IMAGE BOUNDARY LINE

D04 — EXTRACT COMBINATION OF IMAGE BOUNDARY LINES

D05

FRAME-SET PERIOD IN WHICH COMBINATION OF IMAGE BOUNDARY LINES MOVES CONTINUOUSLY IS NEWLY DETECTEED?

NO

YES

D06

OUTPUT SPECIAL EFFECT FRAME-SET PERIOD INFORMATION

D07

END FRAME?    NO

YES

END

# Fig. 18

INPUT VIDEO (FRAME SERIES)

IMAGE BOUNDARY LINE EXTRACTION SECTION /12

IMAGE BOUNDARY LINE CANDIDATE PIXEL DETECTION SECTION /111

EDGE DIRECTION CALCULATION SECTION /121

WEIGHTED HOUGH TRANSFORM SECTION /122

SPECIAL EFFECT DETECTION SECTION /21

IMAGE BOUNDARY LINE HAVING FRAME-SET PERIOD DETECTION SECTION /211

SPECIAL EFFECT FRAME-SET PERIOD INFORMATION

# Fig. 19

DIRECTION OF
IMAGE BOUNDARY LINE

EDGE DIRECTIONS OF PIXELS
SPECIFYING IMAGE BOUNDARY LINE

# Fig. 20

INPUT VIDEO (FRAME SERIES)

IMAGE BOUNDARY LINE
EXTRACTION SECTION /13

/111
IMAGE BOUNDARY LINE CANDIDATE
PIXEL DETECTION SECTION

/112
LINE EXTRACTION SECTION

/131
EDGE DIRECTION
CALCULATION SECTION

/132
IMAGE BOUNDARY LINE
FILTERING SECTION

/21
SPECIAL EFFECT
DETECTION SECTION /211
IMAGE BOUNDARY LINE HAVING
FRAME-SET PERIOD DETECTION SECTION

SPECIAL EFFECT FRAME-SET PERIOD INFORMATION

# Fig. 21

INPUT VIDEO (FRAME SERIES)

IMAGE BOUNDARY LINE
EXTRACTION SECTION ⟋14

⟋111
IMAGE BOUNDARY LINE CANDIDATE
PIXEL DETECTION SECTION

⟋112
LINE EXTRACTION SECTION

⟋141
MOTION VECTOR
CALCULATION SECTION

⟋142
IMAGE BOUNDARY LINE
FILTERING SECTION

⟋21
SPECIAL EFFECT
DETECTION SECTION

⟋211
IMAGE BOUNDARY LINE HAVING
FRAME-SET PERIOD DETECTION SECTION

SPECIAL EFFECT FRAME-SET PERIOD INFORMATION

# Fig. 22

INPUT VIDEO (FRAME SERIES)

⌐3
```
GRADUAL CHANGE PERIOD
DETECTION SECTION
```

⌐11
IMAGE BOUNDARY LINE
EXTRACTION SECTION

⌐111
```
IMAGE BOUNDARY LINE CANDIDATE
PIXEL DETECTION SECTION
```

⌐112
```
LINE EXTRACTION SECTION
```

⌐21
SPECIAL EFFECT
DETECTION SECTION

⌐211
```
IMAGE BOUNDARY LINE HAVING
FRAME-SET PERIOD DETECTION SECTION
```

SPECIAL EFFECT FRAME-SET PERIOD INFORMATION

# Fig. 23

INPUT VIDEO (FRAME SERIES)

**IMAGE BOUNDARY LINE EXTRACTION SECTION** /11

> **IMAGE BOUNDARY LINE CANDIDATE PIXEL DETECTION SECTION** /111

> **LINE EXTRACTION SECTION** /112

**SPECIAL EFFECT DETECTION SECTION** /21

> **IMAGE BOUNDARY LINE HAVING FRAME-SET PERIOD DETECTION SECTION** /211

**FRAME COMPARISON SECTION** /4

SPECIAL EFFECT FRAME-SET PERIOD INFORMATION

# Fig. 24

INPUT VIDEO (FRAME SERIES)

/11

IMAGE BOUNDARY LINE
EXTRACTION SECTION

/111

IMAGE BOUNDARY LINE CANDIDATE
PIXEL DETECTION SECTION

/112

LINE EXTRACTION SECTION

/21

SPECIAL EFFECT
DETECTION SECTION

/211

IMAGE BOUNDARY LINE HAVING
FRAME-SET PERIOD DETECTION SECTION

/5

FILTERING SECTION

SPECIAL EFFECT FRAME-SET PERIOD INFORMATION

## INTERNATIONAL SEARCH REPORT

International application No.

PCT/JP2007/060035

| A. CLASSIFICATION OF SUBJECT MATTER |
|---|
| *G06T7/20*(2006.01)i |

According to International Patent Classification (IPC) or to both national classification and IPC

| B. FIELDS SEARCHED |
|---|
| Minimum documentation searched (classification system followed by classification symbols)<br>G06T7/20 |

Documentation searched other than minimum documentation to the extent that such documents are included in the fields searched
Jitsuyo Shinan Koho     1922-1996    Jitsuyo Shinan Toroku Koho   1996-2007
Kokai Jitsuyo Shinan Koho  1971-2007    Toroku Jitsuyo Shinan Koho  1994-2007

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 7-288840 A (Matsushita Electric Industrial Co., Ltd.),<br>31 October, 1995 (31.10.95),<br>Par. Nos. [0042] to [0051]; Fig. 28<br>& US 5732146 A | 1<br>2-31 |
| Y | JP 2006-53921 A (Microsoft Corp.),<br>23 February, 2006 (23.02.06),<br>Par. Nos. [0015] to [0043]; Figs. 2 to 4<br>& US 2006/39611 A1     & EP 1626371 A1 | 1 |
| A | Arun Hampapur et al., Digital Video Segmentation, Proceedings of the second ACM international conference on Multimedia, ACM Press, 1994, pp. 357-364 | 1-31 |

☐  Further documents are listed in the continuation of Box C.     ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>08 June, 2007 (08.06.07) | Date of mailing of the international search report<br>19 June, 2007 (19.06.07) |
|---|---|
| Name and mailing address of the ISA/<br>   Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI8237549 A
- JP P2005237002 A
- JP P2005237002 B
- JP HEISEI7288840 A
- JP HEISEI11252501 A
- JP HEISEI11252509 A
- JP HEISEI6259561 A
- JP HEISEI9245167 A
- JP 3585977 B

**Non-patent literature cited in the description**

- **YOSHIHIKO KAWAI ; NOBORU BABAGUCHI ; TADAHIRO KITAHASHI.** Detection of Replay Scenes in Broadcasted Sports Video by Focusing on Digital Video Effects. *The transactions of Institute of Electronics, Information and Communication Engineers,* February 2001, vol. J84-D-2 (2), 432-435
- Handbook of Image Analysis. University of Tokyo Press, September 2004
- **JOHN CANNY.** A Computational Approach to Edge ''Detection. *IEEE Transactions on Pattern Analysis and Machine Intelligence,* November 1986, vol. 8 (6), 679-698
- **H. J. ZHANG ; A. KANKANHALLI ; S. W. SMO-LIAR.** Automatic Partitioning of Full-Motion Video. *Multimedia Systems,* 1993, vol. 1, 10-28
- Handbook of Image Analysis. 1228-1246
- Laplacian or the like. **PREWITT ; SOBEL ; ROBERTS ; ROBINSON ; KIRSCH.** Handbook of Image Analysis
- Handbook of Image Analysis. 1495-1498
- Handbook of Image Analysis. 1246-1260
- Handbook of Image Analysis. 1254-1256
- Handbook of Image Analysis. 1256-1258
- Handbook of Image Analysis. 1232